(19) Europäisches Patentamt
European Patent Office
Office européen des brevets

(11) **EP 4 319 243 A1**

(12) **EUROPEAN PATENT APPLICATION**
published in accordance with Art. 153(4) EPC

(43) Date of publication:
**07.02.2024 Bulletin 2024/06**

(21) Application number: **21933586.6**

(22) Date of filing: **29.03.2021**

(51) International Patent Classification (IPC):
*H04W 24/00* (2009.01)

(52) Cooperative Patent Classification (CPC):
**H04W 24/00**

(86) International application number:
**PCT/CN2021/083694**

(87) International publication number:
**WO 2022/204901 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventor: **LI, Yanhua**
**Beijing 100085 (CN)**

(74) Representative: **Kudlek, Franz Thomas**
**Dehns Germany**
**Theresienstraße 6-8**
**80333 München (DE)**

(54) **RELAX MEASUREMENT METHOD AND APPARATUS, AND COMMUNICATION DEVICE AND STORAGE MEDIUM**

(57) Provided in the embodiments of the present disclosure are a relax measurement method. The method is executed by a terminal. The method comprises: in response to a terminal in a predetermined state performing relax measurement, performing a relax measurement operation according to a relax sequence, wherein the relax sequence indicates at least two alternative relax modes, and the alternative relax modes correspond to different relax measurement parameters.

terminal

Base station

block 31, performing a relaxed-measurement operation based on a relaxation sequence in response to the terminal in a predetermined state performing a relaxed measurement; in which the relaxation sequence indicates at least two candidate relaxation modes, and the candidate relaxation modes correspond to different relaxed-measurement parameters

wireless communication

FIG. 3

**Description**

<u>**TECHNICAL FIELD**</u>

The present disclosure relates to a field of wireless communication technology, but is not limited to the field of wireless communication technology, in particular to a method and apparatus for measurement relaxation, a communication device and a storage medium.

<u>**BACKGROUND**</u>

In a wireless communication network, for a terminal device, in order to obtain a serving cell with good wireless communication quality, the terminal device needs to measure surrounding neighboring cells. However, if measurements are conducted too frequently, power consumption of the terminal device would be too high, resulting in short battery life of the terminal device. Therefore, a relaxed measurement mechanism is introduced, which can render the terminal device more energy-efficient.

In the related art, in order to meet requirements of low cost, low complexity, coverage enhancement, power saving, and the like, different types of terminal devices are introduced. Taking a reduced capability (Redcap) terminal as an example, after the Redcap terminal is introduced, which is different from a common terminal, such as an enhanced mobile broadband (eMBB) terminal, the Redcap terminal is stationary in some scenarios, and mobility of the Redcap terminal is less than that of the eMBB terminal. After different types of terminal devices are introduced, the relaxed measurement mechanism needs to be adjusted to adapt to different types of the terminal devices.

<u>**SUMMARY**</u>

The present disclosure discloses a method and apparatus for measurement relaxation, a communication device and a storage medium.

According to a first aspect of the embodiments of the present disclosure, a method for measurement relaxation, performed by a terminal, is provided, and the method includes:

performing a relax measurement operation based on a relaxation sequence in response to the terminal in a predetermined state performing a relaxed measurement;
in which the relaxation sequence indicates at least two candidate relaxation modes, and the candidate relaxation modes correspond to different relaxed-measurement parameters.

In an embodiment, performing the relax measurement operation based on the relaxation sequence, in response to the terminal in the predetermined state performing the relax measurement includes:

performing the relaxed-measurement operation based on the relaxation sequence in response to the terminal with a moving speed less than a speed threshold performing the relaxed measurement;
or,
performing the relaxed-measurement operation based on the relaxation sequence in response to the terminal in a stationary state performing the relaxed measurement.

In an embodiment, the relaxation sequence indicates at least N candidate relaxation modes, N > 2, and looseness of relaxed measurements performed based on the N candidate relaxation modes are different.

In an embodiment, the relaxation sequence is determined based on a measurement type of a cell measurement.

In an embodiment, the measurement type includes one or more of:

an intra-frequency cell measurement, a low priority inter-frequency cell measurement, a middle priority inter-frequency cell measurement, and a high priority inter-frequency cell measurement.

In an embodiment, in response to the measurement type being the intra-frequency cell measurement, the low priority inter-frequency cell measurement and/or the middle priority inter-frequency cell measurement, the candidate relaxation modes include one or more of:

a first relaxation mode, configured to indicate relaxing a measurement period to N1 times of a time measurement interval, where N1 is a positive number greater than 1;
a second relaxation mode, configured to indicate stopping the measurement for N2 hours, where N2 is a positive number;
a fourth relaxation mode, configured to indicate stopping the measurement for N3 hours, where N3 is a positive number greater than N2;

a fifth relaxation mode, configured to indicate relaxing the measurement period to N4 times of the time measurement interval, where N4 is a positive number greater than N1; and

a sixth relaxation mode, configured to indicate stopping the measurement.

In an embodiment, in response to the measurement type being a high priority inter-frequency cell measurement, the candidate relaxation modes include one or more of:

a first relaxation mode, configured to indicate relaxing a measurement period to N1 times of a time measurement interval, where N1 is a positive number greater than 1;

a second relaxation mode, configured to indicate stopping a measurement for N2 hours, where N2 is a positive number;

a third relaxation mode, configured to indicate relaxing the measurement period to a measurement interval of a1 seconds, where a1 is a positive number;

a fourth relaxation mode, configured to indicate stopping the measurement for N3 hours, where N3 is a positive number greater than N2;

a fifth relaxation mode, configured to indicate relaxing measurement period to N4 times of the time measurement interval, where N4 is a positive number greater than N1; and

a sixth relaxation mode, configured to indicate stopping the measurement; and

a seventh relaxation mode, configured to indicate relaxing measurement period to a measurement interval of a2 seconds, where a2 is greater than a1.

In an embodiment, the terminal is a non-cell-center terminal, and performing the relaxed-measurement operation based on the relaxation sequence in response to the terminal in the predetermined state performing the relaxed measurement includes:

in response to a measurement relaxation criterion of low mobility and a measurement relaxation criterion of not located at a cell edge configured by a network being satisfied and the terminal being in the predetermined state, switching from the first relaxation mode in the candidate relaxation modes to the second relaxation mode in the candidate relaxation modes to perform the relaxed measurement;

or,

in response to one of the measurement relaxation criterion of low mobility or the measurement relaxation criterion of not located at a cell edge configured by the network being satisfied and the terminal being in the predetermined state, switching from the first relaxation mode in the candidate relaxation modes to the second relaxation mode in the candidate relaxation modes to perform the relaxed measurement;

or,

in response to the measurement relaxation criterion of not located at a cell edge configured by the network being satisfied and the terminal being in the predetermined state, switching from the first relaxation mode in the candidate relaxation modes to the second relaxation mode in the candidate relaxation modes to perform the relaxed measurement;

or,

in response to the measurement relaxation criterion of low mobility configured by the network being satisfied and the terminal being in the predetermined state, switching from the first relaxation mode in the candidate relaxation modes to the second relaxation mode in the candidate relaxation modes to perform the relaxed measurement;

in which the predetermined state includes a stationary state or a moving state with a moving speed less than a speed threshold; looseness of the relaxed measurement performed based on the second relaxation mode is greater than looseness of the relaxed measurement performed based on the first relaxation mode.

In an embodiment, the terminal is a cell-center terminal, and performing the relaxed-measurement operation based on the relaxation sequence in response to the terminal in the predetermined state performing the relax measurement includes:

in response to a measurement relaxation criterion of low mobility and a measurement relaxation criterion of not located at a cell edge configured by a network being satisfied and the terminal being in the predetermined state, switching from the first relaxation mode in the candidate relaxation modes to the second relaxation mode in the candidate relaxation modes to perform the relaxed measurement;

or,

in response to one of the measurement relaxation criterion of low mobility or the measurement relaxation criterion of not located at a cell edge configured by the network being satisfied and the terminal being in the predetermined state, switching from the first relaxation mode in the candidate relaxation modes to the second relaxation mode in the candidate relaxation modes to perform the relaxed measurement;

or,

in response to the measurement relaxation criterion of not located at a cell edge configured by the network being satisfied and a determination result indicating that the terminal is in the predetermined state, switching from the first relaxation mode in the candidate relaxation modes to the second relaxation mode in the candidate relaxation modes to perform the relaxed measurement;

or,

in response to the measurement relaxation criterion of low mobility configured by the network being satisfied and the determination result indicating that the terminal is in the predetermined state, switching from the first relaxation mode in the candidate relaxation modes to the second relaxation mode in the candidate relaxation modes to perform the relaxed measurement;

in which the predetermined state includes a stationary state or a moving state with a moving speed less than a speed threshold; looseness of the relaxed measurement performed based on the second relaxation mode is greater than the looseness of the relaxed measurement performed based on the first relaxation mode.

In an embodiment, the method further includes:

determining, according to a configuration result of a predetermined information field, whether to allow performing the relaxed measurement based on a relaxation mode of stopping the measurement.

In an embodiment, the predetermined information field includes one or more of:

a first predetermined information field, configured to indicate whether a non-cell-center terminal performing an intra-frequency measurement, a low priority inter-frequency cell measurement and/or a middle priority inter-frequency measurement is allowed to use a relaxation mode of stopping the measurement to perform the relaxed measurement;

a second predetermined information field, configured to indicate whether a non-cell-center terminal performing a high priority inter-frequency cell measurement is allowed to use the relaxation mode of stopping the measurement to perform the relaxed measurement; and

the third predetermined information field, configured to indicate whether a cell-center terminal performing a high priority inter-frequency cell measurement is allowed to use the relaxation mode of stopping the measurement to perform the relaxed measurement.

In an embodiment, it is determined, according to a configuration result of a predetermined information field, whether to allow performing the relaxed measurement based on the relaxation sequence.

In an embodiment, the predetermined information field includes one or more of:

a fourth predetermined information field, configured to indicate whether the terminal is allowed to perform the relaxed measurement based on the relaxation sequence in response to a network configuring a measurement relaxation criterion of not located at a cell edge and a non-cell-edge terminal performing an intra-frequency cell measurement and/or a low priority inter-frequency cell measurement being in the predetermined state;

a fifth predetermined information field, configured to indicate whether the terminal is allowed to perform the relaxed measurement based on the relaxation sequence in response to the network configuring a measurement relaxation criterion of low mobility and a cell-center terminal performing a high priority inter-frequency cell measurement satisfying the low mobility;

a sixth predetermined information field, configured to indicate whether the terminal is allowed to perform the relaxed measurement based on the relaxation sequence in response to the network configuring the measurement relaxation criterion of not located at a cell edge and a cell-center terminal performing a high priority inter-frequency cell measurement being in the predetermined state; and

a seventh predetermined information field, configured to indicate whether the terminal is allowed to perform the relaxed measurement based on the relaxation sequence in response to the network configuring a measurement relaxation criterion of not located at a cell edge and a non-cell-edge terminal performing a high priority inter-frequency cell measurement being in the predetermined state;

in which the predetermined state includes a stationary state or a moving state with a moving speed less than a speed threshold.

According to a second aspect of the embodiments of the present disclosure, an apparatus for measurement relaxation is provided, which is performed by a terminal. The apparatus includes:

a processing module, in which,
the processing module is configured to:

perform a relaxed-measurement operation based on a relaxation sequence, in response to the terminal in a predetermined state performing a relaxed measurement;
in which the relaxation sequence indicates at least two candidate relaxation modes, and the candidate relaxation modes correspond to different relaxed-measurement parameters.

According to a third aspect of the embodiments of the present disclosure, a communication device is provided. The communication device includes:

a processor;
a memory configured to store instructions executable by the processor;
in which the processor is configured to implement the method of any one of the embodiments in the present disclosure.

According to a fourth aspect of the embodiments of the present disclosure, a computer storage medium with a computer executable program stored thereon is provided. The method of any embodiment of the present disclosure is implemented when the computer executable program is executed by the processor.

In the embodiments of the present disclosure, the relaxed-measurement operation is performed based on the relaxation sequence in response to the terminal in the predetermined state performing the relaxed measurement. The relaxation sequence indicates at least two candidate relaxation modes. The candidate relaxation modes correspond to different relaxed measurement parameters. First, when the terminal in the predetermined state needs to perform the relaxed measurement, the terminal performs the relaxed-measurement operation based on the relaxation sequence. Since the relaxation sequence indicates at least two candidate relaxation modes, an appropriate relaxation mode can be selected from the candidate modes for relaxation. Compared with a mode that performs relaxation in a fixed way when the relaxed measurement is required, the relaxation mode of the embodiments of the present disclosure can adapt to the motion state of the terminal, which results in a better relaxation effect of the relaxed measurement. Next, the relaxed measurement is performed based on the relaxation sequence, so that a looser relaxation mode may be used for performing the relaxed measurement, which further saves the power consumption of the terminal, and prolongs endurance time of the terminal.

## BRIEF DESCRIPTION OF THE DRAWINGS

FIG 1 is a structure diagram illustrating a wireless communication system according to an example embodiment.
FIG 2 is a schematic diagram illustrating a mobile location area of a terminal according to an example embodiment.
FIG 3 is a flowchart diagram illustrating a method for measurement relaxation according to an example embodiment.
FIG 4 is a flowchart diagram illustrating a method for measurement relaxation according to an example embodiment.
FIG 5 is a flowchart diagram illustrating a method for measurement relaxation according to an example embodiment.
FIG 6 is a flowchart diagram illustrating a method for measurement relaxation according to an example embodiment.
FIG 7 is a flowchart diagram illustrating a method for measurement relaxation according to an example embodiment.
FIG 8 is a flowchart diagram illustrating a method for measurement relaxation according to an example embodiment.
FIG 9 is a flowchart diagram illustrating a method for measurement relaxation according to an example embodiment.
FIG 10 is a flowchart diagram illustrating a method for measurement relaxation according to an example embodiment.
FIG 11 is a flowchart diagram illustrating a method for measurement relaxation according to an example embodiment.
FIG 12 is a flowchart diagram illustrating a method for measurement relaxation according to an example embodiment.
FIG 13 is a flowchart diagram illustrating a method for measurement relaxation according to an example embodiment.
FIG 14 is a flowchart diagram illustrating a method for measurement relaxation according to an example embodiment.
FIG 15 is a flowchart diagram illustrating a method for measurement relaxation according to an example embodiment.
FIG 16 is a flowchart diagram illustrating a method for measurement relaxation according to an example embodiment.
FIG 17 is a flowchart diagram illustrating a method for measurement relaxation according to an example embodiment.
FIG 18 is a flowchart diagram illustrating a method for measurement relaxation according to an example embodiment.
FIG 19 is a flowchart diagram illustrating a method for measurement relaxation according to an example embodiment.
FIG 20 is a flowchart diagram illustrating a method for measurement relaxation according to an example embodiment.
FIG 21 is a flowchart diagram illustrating a method for measurement relaxation according to an example embodiment.
FIG 22 is a flowchart diagram illustrating a method for measurement relaxation according to an example embodiment.
FIG 23 is a flowchart diagram illustrating a method for measurement relaxation according to an example embodiment.

FIG 24 is a block diagram illustrating an apparatus for measurement relaxation according to an example embodiment.
FIG 25 is a structure diagram illustrating a terminal according to an example embodiment.
FIG 26 is a block diagram illustrating a base station according to an example embodiment.

## DETAILED DESCRIPTION

The example embodiments will be described in detail here, and examples thereof are shown in the accompanying drawings. When the following descriptions are referred to the accompanying drawings, unless otherwise indicated, the same numbers in different drawings represent the same or similar elements. The implementations described in the following example embodiments do not represent all implementations consistent with the present disclosure. Rather, they are merely examples of apparatuses and methods consistent with some aspects of the present disclosure as detailed in the appended claims.

The terms used in the present disclosure are only for the purpose of describing specific embodiments and are not intended to limit the embodiments of the present disclosure. The singular forms "a", "the" and "said" used in the embodiments of the present disclosure and the appended claim are also intended to include plural forms, unless the context clearly indicates otherwise. It should also be understood that the term "and/or" used in the present disclosure means and includes any or all possible combinations of one or more associated listed items.

It should be understood that, although the terms first, second, third, etc. may be used in the embodiments of the present disclosure to describe various information, such information shall not be limited to these terms. These terms are only used to distinguish the same type of information. For example, without departing from the scope of this present disclosure, first information may also be referred to as second information, and similarly, and the second information may also be referred to as the first information. Depending on the context, for example, the word "if' as used herein may be interpreted as "while" or "when" or "in response to determining".

For purposes of brevity and ease of understanding, the terms used herein are "greater than" or "less than" when representing a size relationship. However, it can be understood by those skilled in the art that the term "greater than" also covers the meaning of "greater than or equal to", and the term "less than" also covers the meaning of "less than or equal to".

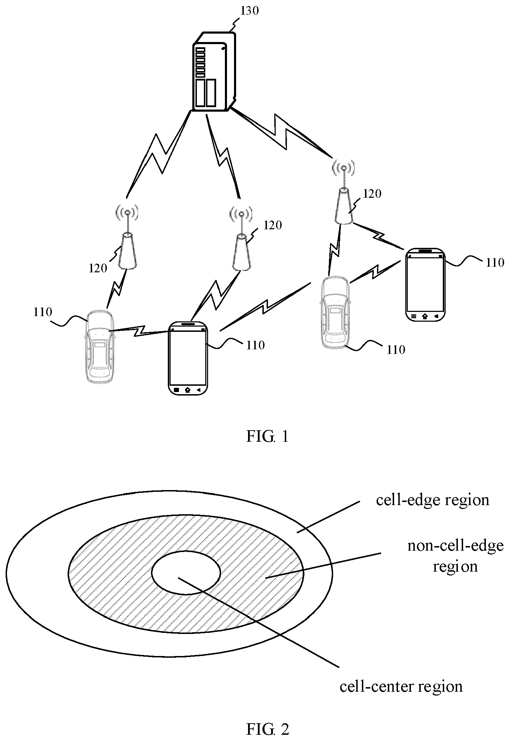

FIG 1 is a structure diagram illustrating a wireless communication system provided in an embodiment of the present disclosure. As illustrated in FIG 1, the wireless communication system is a communications system based on a mobile communication technology. The wireless communication system may include several user equipments 110 and several base stations 120.

The user equipment 110 may refer to a device that provides voice and/or data connectivity to a user. The user equipment 110 may communicate with one or more core networks via a radio access network (RAN). The user equipment 110 may be an Internet of things (IoT) user equipment (UE), such as a sensor device, a mobile phone and a computer having an IoT UE. For example, it may be a fixed, portable, pocket-sized, handheld, computer built-in or vehicle-mounted apparatus, such as a station (STA), a subscriber unit, a subscriber station, a mobile station, a mobile, a remote station, an access point, a remote terminal, an access terminal, a user terminal, a user agent, a user device or a UE. Or, the user equipment 110 may be a device of an unmanned aerial vehicle. Or, the user equipment 110 may be a vehicle-mounted device, such as a driving computer with a wireless communication function, or a wireless user equipment externally connected to the driving computer. Or, the user equipment 110 may be a roadside device, such as a street light, a signal light or other roadside devices with the wireless communication function, and the like.

The base station 120 may be a network side device in the wireless communication system. The wireless communication system may be a 4th generation mobile communication (4G) system, also referred to as a long term evolution (LTE) system. Or the wireless communication system may be a 5G system, also referred to as a new radio (NR) system or a 5G NR system. Or, the wireless communication system may be a next generation system of the 5G system. An access network in the 5G system may be referred to as a new generation-radio access network (NG-RAN).

The base station 120 may be an evolved base station (eNB) adopted in the 4G system. Or, the base station 120 may be a base station (gNB) with a centralized distributed architecture in the 5G system. When the base station 120 adopts the centralized distributed architecture, the base station 120 generally includes a central unit (CU) and at least two distributed units (DU). The CU is equipped with protocol stacks of a packet data convergence protocol (PDCP) layer, a radio link control (RLC) layer and a media access control (MAC) layer, and the DU is equipped with a protocol stack of a physical (PHY) layer. The specific implementation of the base station 120 is not limited in the embodiments of the disclosure.

A wireless connection may be established between the base station 120 and the user equipment 110 via a wireless radio interface. In different implementations, the radio interface is a radio interface based on a 4G standard. Or, the radio interface is a radio interface based on a 5G standard. For example, the radio interface is a new radio interface. Or, the radio interface may be a radio interface based on a next generation mobile communication network technology standard of the 5G.

In some embodiments, an end to end (E2E) connection can also be established between the user equipments 110, such as vehicle to vehicle (V2V) communication, vehicle to infrastructure (V2I) communication, vehicle to pedestrian (V2P) communication, and other scenes in vehicle to everything (V2X).

The above-mentioned user equipment may be considered to be the terminal device of the following embodiments.

In some embodiments, the wireless communication system may further include a network management device 130.

The several base stations 120 are connected with the network management device 130 respectively. The network management device 130 may be a core network device in the wireless communication system. For example, the network management device 130 may be a mobility management entity (MME) in an evolved packet core (EPC). Or, the network management device may be other core network devices, such as a serving gateway (SGW), a public data network gateway (PGW), a policy and charging rules function (PCRF) or a home subscriber server (HSS), and the like. The implementation of the network management device 130 is not limited in the embodiment of the disclosure.

In order to facilitate understanding of those skilled in the art, more than one embodiment is enumerated in the embodiments of the present disclosure to clearly illustrate technical solutions of the embodiments of the present disclosure. Certainly, those skilled in the art may understand that the more than one embodiment provided in the embodiments of the present disclosure may be executed separately, or may be executed together with the method according to other embodiments in the embodiments of the present disclosure, and may also be executed alone or in combination with some methods in the related art, which is not limited in the embodiments of the present disclosure.

In order to better understand the technical solution described in any one of the embodiments of the present disclosure, firstly, modes for relaxing a measurement in the related art are described in the following.

In an embodiment, when a terminal performs an intra-frequency neighbor cell measurement and/or an inter-frequency neighbor cell measurement (may be an inter-frequency measurement with the same priority or a lower priority), if a reference signal receiving power (RSRP) of a serving cell is higher than a threshold and/or if a reference signal receiving quality (RSRQ) is higher than a threshold, the intra-frequency measurement and/or the inter-frequency measurement may not be performed. In an embodiment, for a high-priority inter-frequency neighbor cell measurement, if the RSRP of the serving cell is greater than the threshold and/or the RSRQ of the serving cell is greater than the threshold, the relaxed measurement may be performed, such as relaxed to 60 seconds.

In an embodiment, a measurement relaxation solution includes two parts. A first part is determination of a relaxation condition. That is, what condition the terminal needs to meet to perform a measurement relaxation. In an embodiment, a network configures a measurement threshold for the terminal. The terminal determines whether to perform the measurement relaxation based on a relaxation criterion and the measurement threshold. A second part is how to perform the measurement relaxation. That is, how to implement a relaxation solution after different relaxation conditions are satisfied.

In an embodiment, the relaxed measurement is performed based on criteria that whether the terminal is at a cell edge and whether the terminal is in a low mobility. In the embodiment of the present disclosure, the low mobility of the terminal is different from a displacement such as a slight vibration and the like generated by the terminal due to vibrations and other reasons.

In an embodiment, a difference between the reference signal receiving quality and a current RSRP of the terminal is less than a preset threshold ($S_{SearchDeltaP}$) within a time period $T_{SearchDeltaP}$ ($T_{SearchDeltaP}$ specifies a time period for the relaxed measurement to evaluate a change of Srxlev). That is, change amplitude of signal is not significant. Thus, the current terminal can be determined to be stationary or in a low mobility state. It should be noted that the determination is needed to be considered only when the signal drops. A specific determination condition is:

$$(Srxlev_{Ref} - Srxlev) < S_{SearchDeltaP};$$

where, Srxlev = Srxlev of a current service cell, and a unit is dB;
$Srxlev_{Ref}$ = a reference value of Srxlev of the current service cell, and the unit is dB.

In an embodiment, $Srxlev_{Ref}$ may be configured by following ways: 1. the terminal selects or reselects a new cell; 2. ($Srxlev - Srxlev_{Ref} > 0$); 3. the determination condition is not satisfied within $T_{SearchDeltaP}$. When any one of the above conditions is satisfied, the terminal sets $Srxlev_{Ref}$ as the Srxlev of the current service cell.

In an embodiment, regarding a setting of $T_{SearchDeltaP}$, it may be set to Smins for the LTE system, and may be set to configurable for the NR system. For example, it may be set to be less than or equal to 5 minutes and satisfy a multiple relationship of a measurement period. In an embodiment, when an extended discontinuous reception (eDRX) is configured, if an eDRX period is greater than 5 minutes, $T_{SearchDeltaP}$ is set to be the eDRX period.

In an embodiment, in the LTE system, even if the relaxation condition is satisfied, the terminal may still perform one measurement every 24 hours. In the NR system, measurement relaxation may be performed or the measurement may be stopped.

In an embodiment, when the current Srxlev of the terminal is greater than the threshold value $S_{searchThresholdP}$ and Squal is greater than the threshold value $S_{searchThresholdQ}$ (if it is configured), it is determined that the terminal is not located at a cell edge, and a specific determination condition is:

$$Srxlev > S_{searchThresholdP} \text{ and } Squal > S_{searchThresholdQ};$$

where, Srxlev = Srxlev of the current service cell, and the unit is dB;
where, Squal = Squal of the current service cell, the unit is dB.

Here, it may be understood that these two thresholds are more relaxed thresholds than stop measurement thresholds in the related art (e.g., R15). Referring to FIG 2, a region determined by the above criteria may be a non-cell-edge region in FIG 2. In the embodiment of the present disclosure, a terminal located in the non-cell-edge region is a non-cell-edge terminal. The terminal located in a cell center is a cell-center terminal. The terminal not located in the cell center is a non-cell-center terminal.

In an embodiment, for the intra-frequency measurement or a low-priority inter-frequency measurement, the terminal located in the cell center may completely not perform the measurement, and the terminal in the non-cell center needs to perform the measurement. For example, in a predetermined scenario, the measurement may be stopped for 1 hour or 100ms. For a high priority inter-frequency measurement, the terminal in the cell center may relax from measuring 60s to performing no measurement for 1 hour. For the terminal in the non-cell center, the measurement is stopped for 1 hour or 100ms.

In an embodiment, in order to perform further relaxation or compatibility on an original measurement relaxation framework, a new determination threshold is introduced for the Redcap terminal. That is, a characteristic of the user being stationary is determined based on a stricter mobility standard. However, after this determination criterion for the Redcap is introduced, a certain enhancement may be considered for the measurement relaxation mechanism to adapt to a stationary Redcap terminal. In an embodiment, a stricter determination is introduced for a criterion of whether it is a low mobility, which may be: $(Srxlev_{Ref} - Srxlev) < S_{SearchDeltaP}$. A Smaller $S_{SearchDeltaP}$ is set.

In the related art, time domain relaxation modes of the relax measurement may include: 1. relaxing to a longer time without measurement based on a basis of an original non-measurement (for 1 hour), for example, relaxing to not performing the measurement up to greater than or equal to 1 hour; 2. increasing a measurement interval K1 on the basis of an original measurement, for example, the measurement interval is x times of the original measurement interval K1, where x is a number greater than 0.

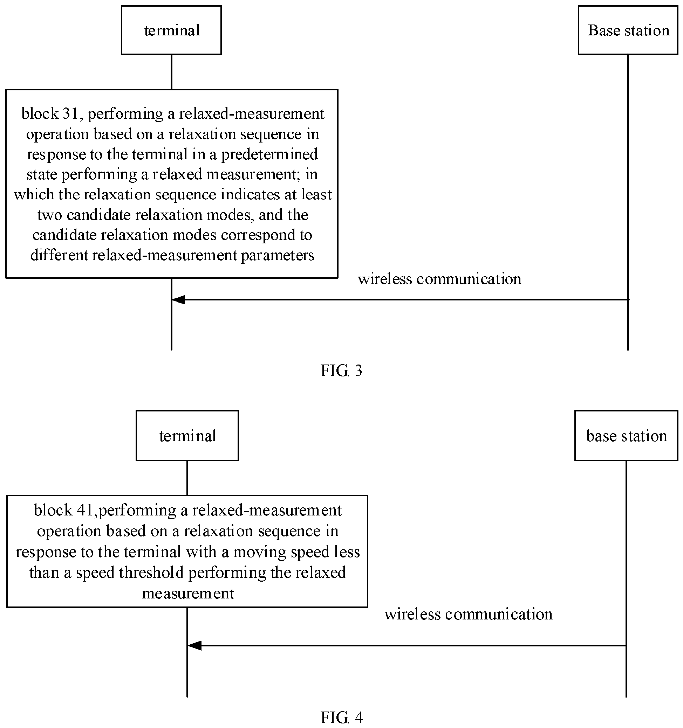

As shown in FIG 3, an embodiment of the present disclosure provides a method for measurement relaxation, where the method is executed by a terminal, and the method includes block 31.

At block 31, a relaxed-measurement operation is performed based on a relaxation sequence in response to the terminal in a predetermined state performing the relaxed measurement.

The relaxation sequence indicates at least two candidate relaxation modes, and the candidate relaxation modes correspond to different relaxed-measurement parameters.

In an embodiment, the predetermined state includes a stationary state or a moving state with a moving speed less than a speed threshold. For those skilled in the art, it can be understood that the moving speed less than the speed threshold is due to a fact that an object may generate a slight vibration/displacement due to various reasons. The slight vibration/displacement is significantly different from a low speed movement of the terminal, but it may have the slight displacement compared with absolute stationary, such as the slight vibration generated by an intelligent water meter when it is in use, and the like. Thus, it can be seen that "moving speed less than the speed threshold" in all embodiments of the present disclosure refers to a very slight displacement. For example, the speed threshold may be a number that is very close to 0. Therefore, the "moving speed less than the speed threshold" is different from the low mobility referred to in the related art, i.e., "moving speed less than the speed threshold" is a moving speed that is less than that of the low mobility of the terminal. It should be noted that, the "stationary state" in all embodiments in the embodiments of the present disclosure means that a moving amplitude is 0 or the moving speed is less than the speed threshold. As mentioned above, the speed threshold is a value close to 0, and is only used to distinguish the terminal being in the slight vibration state and the like, which is obviously different from a "moving state".

In all the embodiments of the present disclosure, the relaxation sequence may be sent by a base station to the terminal device, or may be determined by the terminal device and then sent to the base station, and may also be determined by the terminal device based on a related communication protocol.

In an embodiment, the predetermined state may further be determined based on an attribute of the terminal. For example, an access stratum (AS) layer of the terminal obtains subscription information of the user from a non-access stratum (NAS) layer. For example, the subscription information indicates that the user is an intelligent water meter, that is, the terminal may be determined to be in the predetermined state.

It may be understood that the predetermined state may also be determined based on the attribute of the terminal. For example, the AS layer of the terminal obtains the subscription information of the user from the NAS layer. The subscription information indicates that the terminal is an intelligent water meter, that is, the terminal may be considered to be in the predetermined state.

In an embodiment, the relaxed-measurement operation is performed based on the relaxation sequence in response to a terminal whose moving speed is lower than the speed threshold performing the relaxed measurement.

In another embodiment, the relaxed-measurement operation is performed based on the relaxation sequence in response to a terminal in the stationary state performing the relaxed measurement.

In the embodiment of the present disclosure, the stationary state may be a special example of the predetermined state.

The relaxed-measurement parameter may be a parameter associated with time. For example, a time period of stopping measurement and a measurement interval of the measurement, etc.

In an embodiment, the relaxation sequence at least indicates N candidate relaxation modes, $N \geq 2$. Looseness of the relaxed measurements performed based on the N candidate relaxation modes are different. Here, the looseness may be a degree of relaxation of the time indicated by the relaxation mode in the time domain. For example, a value of the relaxed-measurement parameter corresponding to a first relaxation mode is 1 hour, and is configured to indicate the terminal to stop measuring for 1 hour. A value of the relaxed-measurement parameter corresponding to a second relaxation mode is 2 hours, and is configured to indicate the terminal to stop measuring for 2 hours. The looseness of the relaxed measurement performed based on the second relaxation mode is twice that of the relaxed measurement performed based on the first relaxation mode. For another example, the relaxed-measurement parameter corresponding to the first relaxation mode is a time interval, and a value of the measurement interval is 10ms. The relaxed-measurement parameter corresponding to the second relaxation mode is a time interval, and the value of the measurement interval is 20ms. The looseness of the relaxed measurement performed based on the second relaxation mode is twice that of the relaxed measurement performed based on the first relaxation mode. That is, when the relaxed measurement is performed, the second relaxation mode is a more relaxed mode than the first relaxation mode. Therefore, the greater the looseness, the more relaxed the corresponding relaxation mode is. In all the embodiments of the present disclosure, one parameter may be used to indicate the N candidate relaxation modes indicated by the relaxation sequence, or two or more parameters may be used to indicate the N candidate relaxation modes indicated by the relaxation sequence, which is not limited in the embodiments of the present disclosure.

In an embodiment, the relaxation sequence indicates a plurality of (2 or more) candidate relaxation modes and a sorting mode of the plurality of candidate relaxation modes. In an embodiment, the plurality of candidate relaxation modes are sorted based on the looseness. For example, the relaxation sequence indicates three candidate relaxation modes, which are respectively a first relaxation mode, a second relaxation mode and a third relaxation mode. The looseness of the first relaxation mode is less than that of the second relaxation mode, and the looseness of the second relaxation mode is less than that of the third relaxation mode. The sorting mode of the plurality of candidate relaxation modes may be the first relaxation mode, the second relaxation mode, and the third relaxation mode in sequence. In an embodiment, the terminal may switch from performing the relaxed measurement by using the relaxation mode with a small looseness to performing the relaxed measurement by using the relaxation mode with a large looseness based on the sorting mode.

In the embodiments of the present disclosure, the relaxed-measurement operation is performed based on the relaxation sequence in response to the terminal in the predetermined state performing the relaxed measurement. The relaxation sequence indicates at least two candidate relaxation modes. The candidate relaxation modes correspond to different relaxed-measurement parameters. Here, first, when the terminal in the predetermined state needs to perform the relaxed measurement, the terminal performs the relaxed-measurement operation based on the relaxation sequence. Since the relaxation sequence indicates at least two candidate relaxation modes, an appropriate relaxation mode can be selected from the candidate modes for relaxation. Compared with a mode that performs relaxation in a fixed way when the relaxed measurement is required, the relaxation mode of the embodiments of the present disclosure can adapt to the motion state of the terminal, which results in a better relaxation effect of the relaxed measurement. In addition, the relaxed measurement is performed based on the relaxation sequence, so that a looser relaxation mode may be used for performing the relaxed measurement, which further saves power consumption of the terminal, and prolongs endurance time of the terminal.

It should be noted that, those skilled in the art may understand that the method provided in the embodiments of the present disclosure may be executed separately, or may be executed together with some methods in the embodiments of the present disclosure or some methods in the related art.

As shown in FIG 4, a method for measurement relaxation is provided in the present embodiment. The method is executed by a terminal, and the method includes block 41.

At block 41, a relaxed-measurement operation is performed based on a relaxation sequence in response to the terminal with a moving speed less than a speed threshold performing the relaxed measurement. In an embodiment, in response to the terminal with the moving speed less than the speed threshold performing the relaxed measurement, a first relaxation mode in candidate relaxation modes is switched to a second relaxation mode in candidate relaxation modes for performing the relaxed measurement. Looseness of the relaxed measurement performed based on the second relaxation mode is greater than that of the relaxed measurement performed based on the first relaxation mode.

It should be noted that, those skilled in the art may understand that the methods provided in the embodiments of the present disclosure may be executed separately, or may also be executed together with some methods in the embodiments of the present disclosure or some methods in the related art.

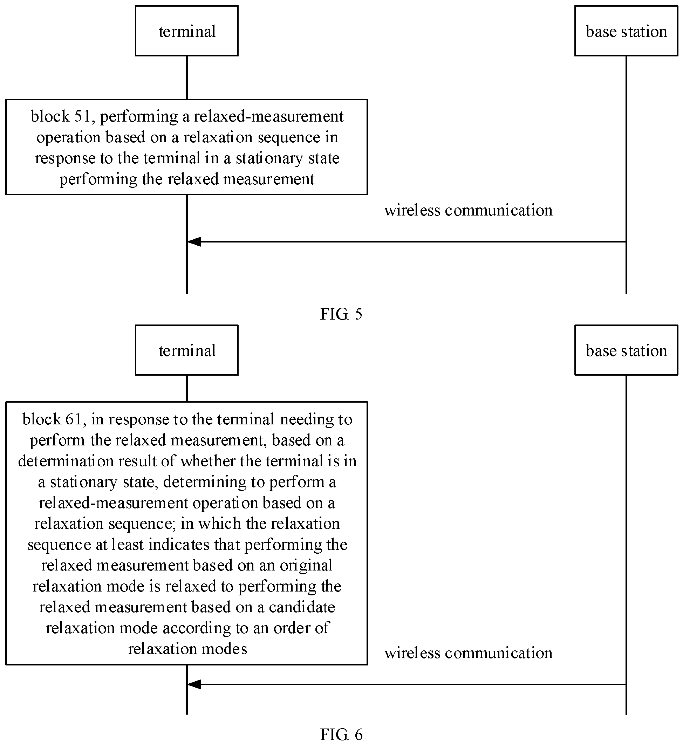

As shown in FIG 5, a method for measurement relaxation is provided in the present embodiment. The method is executed by a terminal, and the method includes block 51.

At block 51, a relaxed-measurement operation is performed based on a relaxation sequence in response to the terminal in a stationary state performing the relaxed measurement.

In an embodiment, in response to the terminal in the stationary state performing the relaxed measurement, a first relaxation mode in candidate relaxation modes is switched to a second relaxation mode in the candidate relaxation modes. Looseness of the relaxed measurement performed based on the second relaxation mode is greater than that of the relaxed measurement performed based on the first relaxation mode.

It should be noted that, those skilled in the art may understand that the methods provided in the embodiments of the present disclosure may be executed separately, or may also be executed together with some methods in the embodiments of the present disclosure or some methods in the related art.

In an embodiment, the relaxation sequence indicates at least N candidate relaxation modes, N ≥ 2. The looseness of the relaxed measurements performed based on the N candidate relaxation modes are different.

In an embodiment, the relaxation sequence is determined based on a measurement type of a cell measurement. In an embodiment, the relaxation sequences determined based on different measurement types are different.

As shown in FIG 6, a method for measurement relaxation is provided in the embodiments of the present disclosure. The method is executed by a terminal, and the method includes block 61.

At block 61, in response to the terminal needing to perform the relaxed measurement, based on a determination result of whether the terminal is in a stationary state, it is determined to perform a relaxed-measurement operation based on a relaxation sequence,.

The relaxation sequence at least indicates that performing the relaxed measurement based on an original relaxation mode is relaxed to performing the relaxed measurement based on a candidate relaxation mode according to an order of relaxation modes.

Here, the terminal may be, but is not limited to, a mobile phone, a wearable device, a vehicle-mounted terminal, a road side unit (RSU), a smart home terminal, an industrial sensing device, and/or a medical device. In an embodiment, the terminal may be a Redcap terminal.

Here, the base station may be an access device for the terminal to access the network. Here, the base station may be a base station of various types, such as a base station of a third generation mobile communication (3G) network, a base station of a fourth generation mobile communication (4G) network, a base station of a fifth generation mobile communication (5G) network, or other evolved base stations.

In an embodiment, the terminal determines to perform the relaxed measurement based on the relaxation sequence in response to the terminal needing to perform the relaxed measurement and the determination result indicating that the terminal is in a stationary state.

In an embodiment, the terminal determines to perform the relaxed measurement based on the original relaxation mode in response to the terminal needing to perform the relaxed measurement and the determination result indicating that the terminal exits the predetermined state. Here, looseness of the relaxed measurement performed based on the original relaxation mode is less than that of the relaxed measurement performed based on the candidate relaxation mode determined based on the relaxation sequence.

Here, the looseness may be configured to represent a degree of relaxation in the time domain of time indicated by the relaxation mode. For example, a value of the relaxed-measurement parameter corresponding to a first relaxation mode is 1 hour, and is configured to indicate the terminal to stop measuring for 1 hour. The value of the relaxed-measurement parameter corresponding to a second relaxation mode is 2 hours, and is configured to indicate the terminal to stop measuring for 2 hours. The looseness of the relaxed measurement performed based on the second relaxation mode is twice that of the relaxed measurement performed based on the first relaxation mode. For another example, a relaxed-measurement parameter corresponding to the first relaxation mode is a time interval, and the value of a measurement interval is 10ms. The relaxed-measurement parameter corresponding to the second relaxation mode is a time interval, and the value of the measurement interval is 20ms. The looseness of the relaxed measurement performed based on the second relaxation mode is twice that of the relaxed measurement performed based on the first relaxation mode. That is, when the relaxed measurement is performed, the second relaxation mode is a more relaxed mode than the first relaxation mode. Therefore, the greater the looseness, the more relaxed the corresponding relaxation mode is.

In an embodiment, the looseness of the relaxed measurement performed based on the original relaxation mode is less than that of the relaxed measurement performed based on a candidate relaxation mode.

In an embodiment, the looseness of the relaxed measurement is determined based on a required energy consumption of the terminal. In an embodiment, it is determined that the looseness of the relaxed measurement is less than a looseness threshold in response to the required energy consumption of the terminal being greater than an energy consumption threshold. It is determined that the looseness of the relaxed measurement is greater than the looseness threshold in response to the required energy consumption of the terminal being less than the energy consumption threshold. In this way, the looseness can adapt to the required energy consumption of the terminal.

In an embodiment, the relaxation sequence indicates more than one candidate relaxation mode. Optionally, the relaxation sequence may further indicate a sorting mode of the more than one candidate relaxation mode. Optionally, the sorting mode of the more than one candidate relaxation mode may be automatically sorted based on the relaxation sequence by a device obtaining the relaxation sequence. In an embodiment, the more than one candidate relaxation mode is sorted based on the looseness. For example, the relaxation sequence indicates three relaxation modes, namely a first relaxation mode, a second relaxation mode and a third relaxation mode respectively. The looseness of the first relaxation mode is less than that of the second relaxation mode, and the looseness of the second relaxation mode is less than that of the third relaxation mode. The sorting mode of the more than one candidate relaxation mode may be the first relaxation mode, the second relaxation mode, and the third relaxation mode in sequence. In an embodiment, the terminal may switch, based on the sorting mode, from performing the relaxed measurement by using a relaxation mode with small looseness to performing the relaxed measurement by using a candidate relaxation mode with large looseness.

In some embodiments, the candidate relaxation modes include one or more of a first relaxation mode, a second relaxation mode, a third relaxation mode, a fourth relaxation mode, a sixth relaxation mode and a seventh relaxation mode.

The first relaxation mode is configured to indicate that a measurement period is relaxed to N1 times of a measurement interval, where N1 is a positive number greater than 1.

The second relaxation mode is configured to indicate that the measurement is stopped for N2 hours, where N2 is a positive number.

The third relaxation mode is configured to indicate that the measurement period is relaxed to a measurement interval of a1 seconds, where a1 is a positive number.

The fourth relaxation mode is configured to indicate that the measurement is stopped for N3 hours, where N3 is a positive number greater than N2.

The fifth relaxation mode is configured to indicate that the measurement period is relaxed to N4 times of the measurement interval, where N4 is a positive number greater than N1.

The sixth relaxation mode is configured to indicate stopping the measurement.

The seventh relaxation mode is configured to indicate that the measurement period is relaxed to a measurement interval of a2 seconds, where a2 is greater than a1.

Here, the measurement period is relaxed to different multiples of the measurement interval, which may further reduce a number of measuring the reference signal per unit time, and is beneficial to save energy consumption of the terminal. After stopping the measurement, the terminal does not need to measure the reference signal, so that the energy consumption of the terminal can be further reduced. The expressions such as "first", "second" and the like in the above mentioned statements are not intended to indicate the order of the relaxation modes, but rather an identifier used to distinguish the more than one relaxation mode.

In an embodiment, the original relaxation mode may be a relaxation mode of which the looseness is less than a looseness threshold in the above relaxation modes, for example, the first relaxation mode or the like. The candidate relaxation mode may be a relaxation mode of which the looseness is greater than the looseness threshold in the above relaxation modes, for example, the sixth relaxation mode. It should be noted that the looseness of the relaxed measurement performed based on the original relaxation mode is less than that of the relaxed measurement performed based on the candidate relaxation mode.

In an embodiment, a measurement type may be a type of a neighbor cell measurement. The type of the neighbor cell measurement may include: an intra-frequency cell measurement, a low priority inter-frequency cell measurement, a middle priority inter-frequency cell measurement, and/or a high priority inter-frequency cell measurement.

In an embodiment, the candidate relaxation mode is determined based on the type of the neighbor cell measurement.

In an embodiment, the candidate relaxation mode may include one or more of the first relaxation mode, the fifth relaxation mode, the second relaxation mode, the fourth relaxation mode, and the sixth relaxation mode in response to the type of the neighbor cell measurement being the intra-frequency measurement, the low priority inter-frequency cell measurement and/or the middle priority inter-frequency cell measurement. The terminal may relax the relaxed measurement performed based on the original relaxation mode to the relaxed measurement performed based on one of the candidate modes. The looseness of the relaxed measurement performed based on the original relaxation mode is less than that of the relaxed measurement performed based on the candidate relaxation mode.

In an embodiment, the candidate relaxation modes include the first relaxation mode, the second relaxation mode and the fourth relaxation mode. The looseness of the first relaxation mode is less than that of the second relaxation mode. The looseness of the second relaxation mode is less than that of the third relaxation mode. In another embodiment, the candidate relaxation modes include the first relaxation mode, the second relaxation mode and the sixth relaxation mode. The looseness of the first relaxation mode is less than that of the second relaxation mode. The looseness of the second relaxation mode is less than that of the sixth relaxation mode.

In an embodiment, the candidate relaxation mode may include one or more of the first relaxation mode, the fifth relaxation mode, the third relaxation mode, the seventh relaxation mode, the second relaxation mode, the fourth relaxation mode and the sixth mode in response to the type of the neighbor cell measurement is the high priority inter-frequency measurement. The terminal may relax the relaxed measurement performed based on the original relaxation mode to the relaxed measurement performed based on one of the candidate modes. The looseness of the relaxed measurement performed based on the original relaxation mode is less than that of the relaxed measurement performed based on the candidate relaxation mode.

In an embodiment, the candidate relaxation modes include the first relaxation mode, the third relaxation mode, the second relaxation mode, and the fourth relaxation mode. The looseness of the first relaxation mode is less than that of the third relaxation mode. The looseness of the third relaxation mode is less than that of the second relaxation mode. The looseness of the second relaxation mode is less than that of the fourth relaxation mode.

In an embodiment, in response to the terminal needing to perform the relaxed measurement and the terminal is in the stationary state, it is determined that the relaxed measurement performed based on the original relaxation mode indicated by the relaxation sequence is switched to the relaxed measurement performed based on the candidate relaxation mode indicated by the relaxation sequence. Here, the looseness of the relaxed measurement performed based on the original relaxation mode is less than that of the relaxed measurement performed based on the candidate relaxation mode.

Here, it should be noted that the type and quantity of the relaxation modes included in the candidate relaxation modes may be determined based on a measurement scenario. Here, the measurement scenario may be a wireless communication scenarios corresponding to different channel communication quality requirements.

In an embodiment, it is determined that relaxed measurement may be performed in response to the neighbor cell measurement being the high priority inter-frequency measurement, the RSRP being greater than a threshold and/or the RSRQ being greater than a threshold, and a trigger condition being satisfied. The trigger condition includes one of a trigger condition 1, a trigger condition 2, a trigger condition 3, a trigger condition 4 and a trigger condition 5.

The trigger condition 1 is that the network only configures a low mobility criterion and that the low mobility criterion is satisfied.

The trigger condition 2 is that the network only configures a criterion of not located at a cell edge and that the criterion of not located at a cell edge is satisfied.

The trigger condition 3 is that the network configures the low mobility criterion and the criterion of not located at a cell edge, and that the criterion of not located at a cell edge is satisfied and the low mobility criterion is not satisfied.

The trigger condition 4 is that the network configures the low mobility criterion and the criterion of not located at a cell edge, and that both are satisfied.

The trigger condition 5 is that the network does not configure the low mobility criterion and/or the criterion of not located at a cell edge for a particular state. In an embodiment, the terminal may perform a further measurement relaxation as long as the terminal meets the particular state such as the stationary condition. When the terminal exits the particular state such as the stationary condition, the measurement relaxation is performed based on one of the trigger conditions 1, 2, 3 or 4 configured by the network. It can be considered that the trigger condition 5 is a simpler mode, that is, whether the terminal is at the cell edge or a cell center is not distinguished, and relaxation is performed based on a mobility state, such as the stationary state. If the terminal exits the stationary state, the terminal falls back to the measurement relaxation mechanism in existing mechanisms. That is, the original relaxation mode is performed by triggering a trigger condition configured by the network. Whether to perform a more simplified mode based on the trigger condition 5 may be configured by the network or pre-agreed by a protocol. The benefits of using this processing are relatively simple and do not need to make complex judgments in combination with the low mobility criterion and/or the criterion of not located at a cell edge configured by the network.

It may be understood that the trigger condition 5 is that the terminal is in the predetermined state, and that the predetermined state includes the stationary state or a moving state with the moving speed less than the speed threshold. In an embodiment, the terminal is in the predetermined state. For example, the terminal is in the stationary state, and a further relaxed measurement may be performed. When the terminal exits the predetermined state, for example, the terminal exits the stationary state, the relaxed measurement may be performed based on one of the above trigger conditions (the trigger condition 1, the trigger condition 2, the trigger condition 3, or the trigger condition 4) configured by the network.

It can be understood that the relaxation mode corresponding to the trigger condition 5 is a simpler mode. That is, whether the terminal is at the cell edge or the cell center is not distinguished any more, and the relaxed measurement is performed based on the predetermined state of the terminal, for example, a stationary state, where the terminal is located. If the terminal exits the stationary state, the terminal falls back to the measurement relaxation mechanism in the existing mechanisms. That is, the relaxed measurement is performed based on the original relaxation mode triggered according to the trigger condition configured by the trigger network. Here, whether to perform the relaxed measurement in a more simplified relaxation mode based on the trigger condition 5 may be configured by the network or predetermined by the protocol. The benefit of processing in this way is that there is no need to combine the low mobility criterion and/or the criterion of not located at a cell edge configured by the network to make complex judgments, and the triggering mechanism is simpler.

In an embodiment, the terminal stops the measurement for 2 hours as long as the terminal meets the stationary state. If not, the terminal returns to the original relaxation mode, i.e., based on the configuration of the network. That is, the measurement is stopped for 2 hours in response to the terminal being in the stationary state. The relaxed measurement is performed by rolling back to the original relaxation mode in response to the terminal not being in the stationary state.

In an embodiment, it is determined that the relaxed measurement needs to be performed in response to the neighbor cell measurement being the high priority or low priority inter-frequency measurement, the RSRP being less than the threshold and/or the RSRQ being less than the threshold, and the trigger condition being satisfied. The trigger condition includes one of trigger conditions 1-6.

The trigger condition 1 is that the network only configures the low mobility criterion and that the low mobility criterion is satisfied.

The trigger condition 2 is that the network configures the low mobility criterion and the criterion of not located at a cell edge, and that the criterion of not located at a cell edge is not satisfied and the low mobility criterion is satisfied.

The trigger condition 3 is that the network only configures the criterion of not located at a cell edge and the criterion of not located at a cell edge is satisfied.

The trigger condition 4 is that the network configures the low mobility criterion, and that the criterion of not located at a cell edge, the criterion of not located at a cell edge is satisfied and the low mobility criterion is not satisfied.

The trigger condition 5 is that the network configures the low mobility criterion and the criterion of not located at a cell edge, and that both are satisfied.

The trigger condition 6 is that the network does not configure the low mobility criterion and/or the criterion of not located at a cell edge for a user in a particular state. In an embodiment, the terminal may perform the further measurement relaxation as long as the terminal meets the particular state, such as the stationary condition. When the terminal exits the particular state, such as the stationary condition, the measurement relaxation is performed based on one of the trigger conditions 1, 2, 3, 4 or 5 configured by the network. The benefits thereof are as indicated above. Whether to perform a more simplified mode based on the trigger condition 6 may be configured by the network or pre-agreed by the protocol.

It may be understood that the trigger condition 6 is that the terminal is in the predetermined state, which includes the stationary state or the moving state with a moving speed less than the speed threshold. In an embodiment, the terminal is in the predetermined state, such as in the stationary state, and a further relaxed measurement may be performed. When the terminal exits the predetermined state, for example, the terminal exits the stationary state, the relaxed measurement may be performed based on one of the above trigger conditions (the trigger condition 1, the trigger condition 2, the trigger condition 3, the trigger condition 4, or the trigger condition 5) configured by the network.

It can be understood that the relaxation mode corresponding to the trigger condition 6 is a simpler mode. That is, whether the terminal is at the cell edge or the cell center is not distinguished any more, and the relaxed measurement is performed based on the predetermined state where the terminal is located, such as the stationary state where the terminal is located. If the terminal exits the stationary state, the terminal rollbacks to the measurement relaxation mechanism in the existing mechanisms. That is, the relaxed measurement is performed based on the original relaxation mode triggered by triggering the trigger condition configured by the network. Here, whether to perform the relaxed measurement in the more simplified relaxation mode based on the trigger condition 6 may be configured by the network or predetermined by the protocol. The benefit of processing in this way is that there is no need to combine the low mobility criterion and/or the criterion of not located at a cell edge configured by the network to make complex judgments, and the triggering mechanism is simpler.

In an embodiment, the terminal stops the measurement for 2 hours as long as the terminal meets the stationary state. If not, the terminal returns to the original relaxation mode, i.e., performing the relaxed measurement based on the configuration of the network. That is, the measurement is stopped for 2 hours in response to the terminal being in the stationary state. The relaxed measurement is performed by returning to the original relaxation mode in response to the terminal not being in the stationary state.

In an embodiment, it is determined that the relaxed measurement needs to be performed in response to the neighbor cell measurement being the intra-frequency measurement, the RSRP being less than the threshold and/or the RSRQ being less than the threshold, and the trigger condition being satisfied. The trigger condition includes one of the following trigger conditions.

The trigger condition 1 is that the network only configures the low mobility criterion and that the low mobility criterion is satisfied.

The trigger condition 2 is that the network configures the low mobility criterion and the criterion of not located at a cell edge, and that the criterion of not located at a cell edge is not satisfied and the low mobility criterion is satisfied.

The trigger condition 3 is that the network only configures the criterion of not located at a cell edge and that the criterion of not located at a cell edge is satisfied.

The trigger condition 4 is that the network configures the low mobility criterion and the criterion of not located at a cell edge, and that the criterion of not located at a cell edge is satisfied and the low mobility criterion is not satisfied.

The trigger condition 5 is that the network configures the low mobility criterion and the criterion of not located at a cell edge, and that both are satisfied.

The trigger condition 6 is that the network does not configure the low mobility criterion and/or the criterion of not located at a cell edge for the user in a particular state. In an embodiment, the terminal may perform the further measurement relaxation as long as the terminal meets the particular state, such as the stationary condition. When the terminal exits the particular state, such as the stationary condition, the measurement relaxation is performed based on one of the trigger conditions 1, 2, 3, 4 or 5 configured by the network. The benefits thereof are as indicated above. Whether to perform the more simplified mode based on the trigger condition 6 may be configured by the network or pre-agreed by a protocol.

It may be understood that the trigger condition 6 is that the terminal is in the predetermined state, which includes the stationary state or the moving state with the moving speed less than the speed threshold. In an embodiment, the terminal is in the predetermined state, such as the stationary state, and a further relaxed measurement may be performed. When the terminal exits the predetermined state, for example, the stationary state, the relaxed measurement may be performed based on one of the above trigger conditions (the trigger condition 1, the trigger condition 2, the trigger condition 3, the trigger condition 4, or the trigger condition 5) configured by the network.

It can be understood that the relaxation mode corresponding to the trigger condition 6 is a simpler mode. That is, whether the terminal is at the cell edge or the cell center is not distinguished any more, and the relaxed measurement is performed based on the predetermined state where the terminal is located, such as the stationary state where the terminal is located. If the terminal exits the stationary state, the terminal rollbacks to the measurement relaxation mechanism in the existing mechanisms. That is, the relaxed measurement is performed based on the original relaxation mode triggered by triggering the trigger condition configured by the network. Here, whether to perform the relaxed measurement in a more simplified relaxation mode based on the trigger condition 6 may be configured by the network or predetermined by the protocol. The benefit of processing in this way is that there is no need to combine the low mobility criterion and/or the criterion of not located at a cell edge configured by the network to make complex judgments, and the triggering mechanism is simpler.

In an embodiment, the terminal stops the measurement for 2 hours as long as the terminal meets the stationary state. If not, the terminal returns to the original relaxation mode, i.e., performing the measurement based on the configuration of the network. That is, the measurement is stopped for 2 hours in response to the terminal being in the stationary state. The relaxed measurement is performed by rolling back to the original relaxation mode in response to the terminal not being in the stationary state. The expressions such as "the trigger condition 1", "the trigger condition 2" and the like in the above mentioned statements are not intended to indicate the order of the trigger conditions, but rather one identifier performed to distinguish the more than one trigger condition.

In an embodiment, whether to allow performing the relaxed measurement based on a relaxation mode of stopping the measurement is determined based on a configuration result of a predetermined switch. Here, the predetermined switch may be a predetermined information field in the terminal.

It should be noted that, referring again to FIG 2, in the embodiment of the present disclosure, the terminal located at the non-cell-edge region is the non-cell-edge terminal, the terminal located at the cell center is the cell-center terminal, and the terminal not located at the cell center is the non-cell-center terminal.

In an embodiment, the predetermined information field is a first predetermined information field. The first predetermined information field is configured to indicate whether the non-cell-center terminal performing the intra-frequency measurement, the middle priority inter-frequency measurement and/or the low priority inter-frequency measurement is allowed to relax to stopping the measurement. For example, the non-cell-center terminal performing the inter-frequency measurement, the middle priority intra-frequency measurement and/or the low priority inter-frequency measurement is not allowed to relax to stopping measurement in response to the first predetermined information field indicating a first value. The non-cell-center terminal performing the intra-frequency measurement, the middle priority inter-frequency measurement and/or the low priority inter-frequency measurement is allowed to relax to stopping the measurement in response to the first predetermined information field indicating a second value.

In an embodiment, the terminal is the non-cell-center terminal performing the intra-frequency measurement, the middle priority inter-frequency measurement, and/or the low priority inter-frequency measurement. The terminal relaxes the relaxed measurement performed based on the original relaxation mode to stopping the measurement in response to the terminal needing to perform the relaxed measurement, the determination result indicating that the terminal is in the stationary state, and the terminal being allowed to relax to stopping the measurement.

In an embodiment, the predetermined information field is a second predetermined information field. The second predetermined information field is configured to indicate whether the non-cell-center terminal performing the high priority inter-frequency measurement is allowed to relax to stopping the measurement. For example, the non-cell-center terminal performing the high priority inter-frequency measurement is not allowed to relax to stopping the measurement in response to the second predetermined information field indicating the first value. The non-cell-center terminal performing the high priority inter-frequency measurement is allowed to relax to stopping the measurement in response to the second predetermined information field indicating the second value.

In an embodiment, the terminal is the non-cell-center terminal performing the high priority inter-frequency measurement. The terminal relaxes the relaxed measurement performed based on the original relaxation mode to stopping the measurement in response to the terminal needing to perform the relaxed measurement, and the determination result indicating that the terminal is in the stationary state, and the terminal being allowed to relax to stopping measurement.

In an embodiment, the predetermined information field is a third information domain. The third predetermined information field is configured to indicate whether the cell-center terminal performing the high priority inter-frequency measurement is allowed to relax to stopping the measurement. For example, the cell-center terminal performing the high priority inter-frequency measurement is not allowed to relax to stopping the measurement in response to the third predetermined information field indicating a third value. The cell-center terminal performing the high priority inter-frequency measurement is allowed to relax to stopping the measurement in response to the third predetermined information field indicating a second value.

In an embodiment, the terminal is the cell-center terminal performing the high priority inter-frequency measurement. The terminal relaxes the relaxed measurement performed based on the original relaxation mode to stopping the measurement in response to the terminal needing to perform the relaxed measurement, the determination result indicating that the terminal is in the stationary state, and the terminal being allowed to relax to stopping the measurement.

In an embodiment, it is determined that the terminal is allowed to relax to stopping the measurement in response to the predetermined information field being configured. It is determined that the terminal is not allowed to relax to stopping the measurement in response to the predetermined information field not being configured.

In an embodiment, the second predetermined information field and the third predetermined information field may correspond to the same predetermined information field. That is, the predetermined information field is configured to be commonly used by the cell-center terminal and the non-cell-center terminal performing the high priority inter-frequency measurement. For example, the predetermined information field is configured as the first value, both the cell-center terminal and the non-cell-center terminal are not allowed to relax to stopping the measurement.

In an embodiment, the first predetermined information field, the second predetermined information field, and the third predetermined information field may correspond to the same predetermined information field. That is, the predetermined information field is configured to be commonly used by terminals of all the measurement types. For example, the predetermined information field is configured as the first value, both the cell-center terminal and the non-cell-center terminal of various measurement types are not allowed to relax to stopping the measurement.

In an embodiment, whether to allow performing the relaxed measurement based on the relaxation sequence is determined based on the configuration result of the predetermined switch. Here, the predetermined switch may be the predetermined information field in the terminal.

In an embodiment, the predetermined information field is a fourth predetermined information field. The fourth predetermined information field is configured to indicate whether the terminal is allowed to perform the relaxed measurement based on the relaxation sequence in response to the network configuring a measurement relaxation criterion of not located at a cell edge and a non-cell-edge terminal which performs the intra-frequency cell measurement and/or the low priority inter-frequency cell measurement being in the stationary state. For example, the non-cell-edge terminal performing the intra-frequency cell measurement and/or the low priority inter-frequency cell measurement is not allowed to perform the relaxed measurement based on the relaxation sequence in response to the fourth predetermined information field indicating the first value. The non-cell-edge terminal performing the intra-frequency cell measurement and/or the low priority inter-frequency cell measurement is allowed to perform the relaxed measurement based on the relaxation sequence in response to the fourth predetermined information field indicating the second value.

In an embodiment, the terminal is the non-cell-edge terminal performing the intra-frequency cell measurement and/or the low priority inter-frequency cell measurement. It is determined that the operation of the relaxed measurement is performed based on the relaxation sequence in response to the terminal needing to perform the relaxed measurement, the determination result indicating that the terminal is in the stationary state, and the terminal being allowed to perform the relaxed measurement based on the relaxation sequence.

In an embodiment, the predetermined information field is a fifth predetermined information field. The fifth predetermined information field is configured to indicate whether the terminal is allowed to perform the relaxed measurement based on the relaxation sequence in response to the network configuring the measurement relaxation criterion of the low mobility and the cell-center terminal performing the high priority inter-frequency cell measurement satisfying the low mobility. For example, the terminal performing the high priority inter-frequency cell measurement is not allowed to perform the relaxed measurement based on the relaxation sequence in response to the fifth predetermined information field indicating the first value. The terminal performing the high priority inter-frequency cell measurement is allowed to perform the relaxed measurement based on the relaxation sequence in response to the fifth predetermined information field indicating the second value.

In an embodiment, the terminal is the cell-center terminal performing the high priority inter-frequency cell measurement. It is determined that the operation of the relaxed measurement is performed based on the relaxation sequence in response to the terminal needing to perform the relaxed measurement, the determination result indicating that the terminal is in the stationary state, and the terminal being allowed to perform the relaxed measurement based on the relaxation sequence.

In an embodiment, the predetermined information field is a sixth predetermined information field. The sixth predetermined information field is configured to indicate whether the terminal is allowed to perform the relaxed measurement based on the relaxation sequence in response to the network configuring the measurement relaxation criterion of not located at a cell edge and the cell-center terminal which performs the high priority inter-frequency cell measurement being in the stationary state. For example, the cell-center terminal performing the high priority inter-frequency cell measurement is not allowed to perform the relaxed measurement based on the relaxation sequence in response to the sixth predetermined information field indicating the first value. The cell-center terminal performing the high priority inter-frequency cell measurement is allowed to perform the relaxed measurement based on the relaxation sequence in response to the sixth predetermined information field indicating the second value.

In an embodiment, the terminal is the cell-center terminal performing the high priority inter-frequency cell measurement. It is determined that the operation of the relaxed measurement is performed based on the relaxation sequence in response to the terminal needing to perform the relaxed measurement, the determination result indicating that the terminal is in the stationary state, and the terminal is allowed to perform the relaxed measurement based on the relaxation sequence.

In an embodiment, the predetermined information field is a seventh predetermined information field. The seventh predetermined information field is configured to indicate whether the terminal is allowed to perform the relaxed measurement based on the relaxation sequence in response to the network configuring the measurement relaxation criterion of not located at a cell edge and the non-cell-edge terminal which performs the high priority inter-frequency cell measurement being in the stationary state. For example, the non-cell-edge terminal performing the high priority inter-frequency cell measurement is not allowed to perform the relaxed measurement based on the relaxation sequence in response to the seventh predetermined information field indicating the first value. The non-cell-edge terminal performing the high priority inter-frequency cell measurement is allowed to perform the relaxed measurement based on the relaxation sequence in response to the seventh predetermined information field indicating the second value.

In an embodiment, the terminal is the non-cell-edge terminal performing the high priority inter-frequency cell measurement. It is determined that the operation of the relaxed measurement is performed based on the relaxation sequence in response to the terminal needing to perform the relaxed measurement, the determination result indicating that the terminal is in the stationary state, and the terminal is allowed to perform the relaxed measurement based on the relaxation sequence.

In an embodiment, it is determined that the terminal is allowed to relax to stopping measurement in response to the predetermined information field being configured. It is determined that the terminal is not allowed to perform the relaxed measurement based on the relaxation sequence in response to the predetermined information field not being configured.

In an embodiment, the fifth predetermined information field, the sixth predetermined information field, and the seventh predetermined information field may correspond to the same predetermined information field. That is, the predetermined information field is configured to be commonly used by the terminals performing the high priority inter-frequency measurement. For example, the predetermined information field is configured as the first value, the terminals performing the high priority inter-frequency measurement are not allowed to perform the relaxed measurement based on relaxation sequence.

In an embodiment, the fourth predetermined information field, the fifth predetermined information field, the sixth predetermined information field, and the seventh predetermined information field may correspond to the same predetermined information field. That is, the predetermined information field is configured to be commonly used by the terminals of all the measurement types. For example, the predetermined information field is configured as the first value, the terminals of various measurement types are not allowed to perform the relaxed measurement based on the relaxation sequence.

In the embodiment of the present disclosure, it is determined, according to the determination result of whether the terminal is in the stationary state, that the relaxed-measurement operation is performed based on the relaxation sequence in response to the terminal needing to perform the relaxed measurement. The relaxation sequence at least indicates to relax from the relaxed measurement performed based on the original relaxation mode to the relaxed measurement performed based on the candidate relaxation mode according to the order of the relaxation modes. Here, first, when the terminal needs to perform the relaxed measurement, whether the terminal is in the stationary state is determined, and the determination result is obtained. The relaxed-measurement operation performed based on the relaxation sequence is determined according to the determination result. Compared with a way to relax unconditionally when the relaxed measurement is required, the mode of relaxing the measurement in the embodiments of the present disclosure can adapt to the motion state of the terminal, so that relaxation effect of the relaxed measurement is better. In addition, the relaxed measurement is performed based on the relaxation sequence, so that a looser relaxation mode may be used for the relaxed measurement, which further saves the power consumption of the terminal, and prolongs endurance time of the terminal.

In the related art, a possible implementation is that whether the terminal is the cell-center terminal is determined based on signal strength or channel quality of the terminal.

It should be noted that, those skilled in the art may understand that the methods provided in the embodiments of the present disclosure may be executed separately, or may also be executed together with some methods in the embodiments of the present disclosure or some methods in the related art.

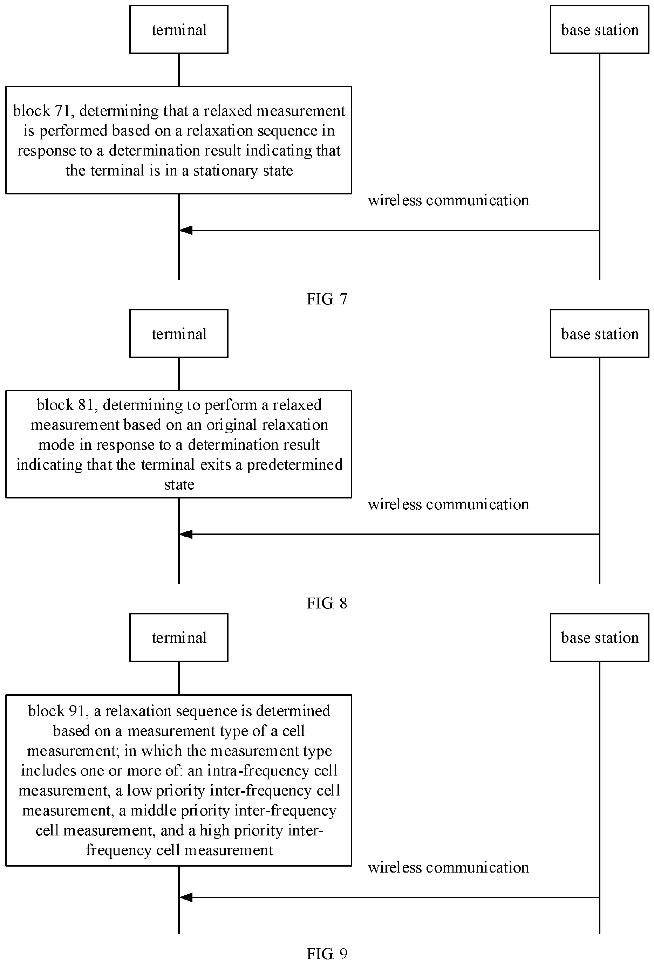

As shown in FIG 7, a method for measurement relaxation is provided in the embodiment of the present disclosure. The method is executed by a terminal, and the method includes block 71.

At block 71, it is determined that a relaxed measurement is performed based on a relaxation sequence in response to a determination result indicating that the terminal is in a stationary state.

The determination result is a result of determining whether the terminal is in the stationary state. Here, the terminal may periodically detect a motion state of the terminal. The motion state of the terminal may be the stationary state or a moving state.

In an embodiment, the terminal determines to perform the relaxed measurement based on the relaxation sequence in response to the terminal needing to perform the relaxed measurement and the determination result indicating that the terminal is in the stationary state.

In an embodiment, the terminal determines to perform the relaxed measurement based on one of candidate relaxation modes determined based on the relaxation sequence in response to the terminal needing to perform the relaxed measurement and the determination result indicating that the terminal is in the stationary state.

In an embodiment, looseness of the relaxed measurement performed based on an original relaxation mode is less than that of the relaxed measurement performed based on the candidate relaxation mode determined based on the relaxation sequence.

It should be noted that, those skilled in the art may understand that the methods provided in the embodiments of the present disclosure may be executed separately, or may also be executed together with some methods in the embodiments of the present disclosure or some methods in the related art.

As shown in FIG 8, a method for measurement relaxation is provided in the embodiment of the present disclosure. The method is executed by a terminal, and the method includes block 81.

At block 81, it is determined to perform a relaxed measurement based on an original relaxation mode in response to a determination result indicating that the terminal exits a predetermined state.

In some embodiments of the present disclosure, the terminal exiting the predetermined state is that a moving speed of the terminal is greater than a speed threshold, and the moving speed of a moving state is greater than a displacement generated by vibrations. Here, the determination result is a result of determining whether the terminal is in the stationary state. Here, the terminal can periodically detect a motion state of the terminal. The motion state of the terminal may be the stationary state or exiting the predetermined state.

In an embodiment, the terminal determines to perform the relaxed measurement based on the original relaxation mode in response to the terminal needing to perform the relaxed measurement and the determination result indicating that the terminal exits the predetermined state. Here, looseness of the relaxed measurement performed based on the original relaxation mode is less than that of the relaxed measurement performed based on the candidate relaxation mode determined based on a relaxation sequence.

It should be noted that, those skilled in the art may understand that the methods provided in the embodiments of the present disclosure may be executed separately, or may also be executed together with some methods in the embodiments of the present disclosure or some methods in the related art.

As shown in FIG 9, a method for measurement relaxation is provided in the embodiment of the present disclosure. The method is executed by a terminal, and the method includes block 91.

At block 91, a relaxation sequence is determined based on a measurement type of a cell measurement.

The measurement type includes one or more of:

an intra-frequency cell measurement, a low priority inter-frequency cell measurement, a middle priority inter-frequency cell measurement, and a high priority inter-frequency cell measurement.

Here, the measurement type of the cell measurement may be the type of a neighbor cell measurement. For example, the relaxation sequence may be a first sequence in response to the measurement type of the cell measurement being the intra-frequency cell measurement. The relaxation sequence may be a second sequence in response to the measurement type of the cell measurement being the high priority inter-frequency cell measurement. Here, a relaxation mode may be determined based on the relaxation sequence.

In an embodiment, the relaxation sequences associated with different measurement types are different. Here, a candidate relaxation mode may be determined based on the relaxation sequence.

In an embodiment, the candidate relaxation mode includes one or more of a first relaxation mode, a second relaxation mode, a fourth relaxation mode, a fifth relaxation mode, and a sixth relaxation mode, in response to the measurement type being the intra-frequency cell measurement, the low priority inter-frequency cell measurement and/or the middle priority inter-frequency cell measurement.

The first relaxation mode is configured to indicate that a measurement period is relaxed to N1 times of a measurement interval, where N1 is a positive number greater than 1.

The second relaxation mode is configured to indicate stopping the measurement for N2 hours, where N2 is a positive number.

The fourth relaxation mode is configured to indicate stopping the measurement for N3 hours, where N3 is a positive number greater than N2.

The fifth relaxation mode is configured to indicate that the measurement period is relaxed to N4 times of the measurement interval, where N4 is a positive number greater than N1.

The sixth relaxation mode is configured to indicate stopping the measurement.

The candidate relaxation mode includes one or more of the first relaxation mode, the second relaxation mode, the third relaxation mode, the fourth relaxation mode, the fifth relaxation mode, the sixth relaxation mode, and a seventh relaxation mode, in response to the measurement type being the high priority inter-frequency cell measurement.

The first relaxation mode is configured to indicate that the measurement period is relaxed to N1 times of the measurement interval, where N1 is a positive number greater than 1.

The second relaxation mode is configured to indicate stopping a measurement for N2 hours, where N2 is a positive number.

The third relaxation mode is configured to indicate that the measurement period is relaxed to a measurement interval of a1 seconds, where a1 is a positive number.

The fourth relaxation mode is configured to indicate stopping the measurement for N3 hours, where N3 is a positive number greater than N2.

The fifth relaxation mode is configured to indicate that the measurement period is relaxed to N4 times of the measurement interval, where N4 is a positive number greater than N1.

The sixth relaxation mode is configured to indicate stopping the measurement.

The seventh relaxation mode is configured to indicate that the measurement period is relaxed to a measurement interval of a2 seconds, where a2 is greater than a1.

It should be noted that, those skilled in the art may understand that the methods provided in the embodiments of the present disclosure may be executed separately, or may also be executed together with some methods in the embodiments of the present disclosure or some methods in the related art.

The expressions such as "first", "second" and the like in the above mentioned statements are not intended to indicate the order of the relaxation modes, but rather an identifier used to distinguish the more than one relaxation mode.

A method for measurement relaxation is provided in the embodiment of the present disclosure. The method is executed by a terminal. The terminal is a non-cell-center terminal. The method includes:

switching from the first relaxation mode in the candidate relaxation modes to the second relaxation mode in the candidate relaxation modes to perform the relaxed measurement in response to a measurement relaxation criterion of low mobility and a measurement relaxation criterion of not located at a cell edge configured by a network being satisfied and the terminal being in a predetermined state;
or,
switching from the first relaxation mode in the candidate relaxation modes to the second relaxation mode in the candidate relaxation modes to perform the relaxed measurement in response to one of the measurement relaxation criterion of low mobility or the measurement relaxation criterion of not located at a cell edge configured by the network being satisfied and the terminal being in the predetermined state;
or,
switching from the first relaxation mode in the candidate relaxation modes to the second relaxation mode in the candidate relaxation modes to perform the relaxed measurement in response to the measurement relaxation criterion of not located at a cell edge configured by the network being satisfied and the terminal being in the predetermined state;

or,

switching from the first relaxation mode in the candidate relaxation modes to the second relaxation mode in the candidate relaxation modes to perform the relaxed measurement in response to the measurement relaxation criterion of low mobility configured by the network being satisfied and the terminal being in the predetermined state.

The predetermined state includes a stationary state or a moving state with a moving speed less than a speed threshold. Looseness of the relaxed measurement performed based on the second relaxation mode is greater than that of the relaxed measurement performed based on the first relaxation mode.

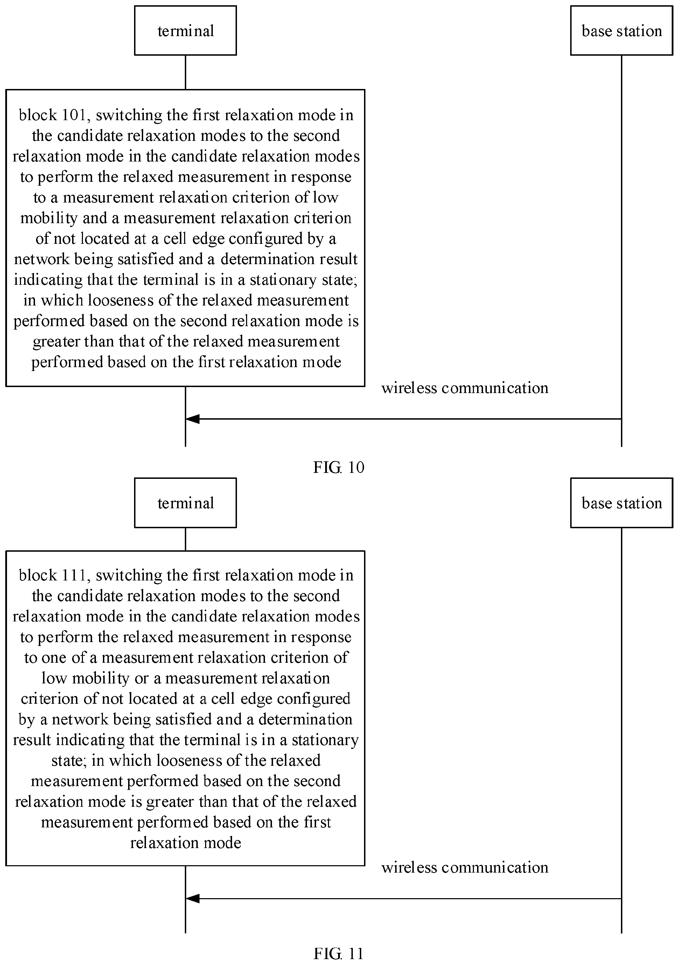

As shown in FIG 10, a method for measurement relaxation is provided in the embodiments of the present disclosure. The method is executed by a terminal. The terminal is a non-cell-center terminal performing an intra-frequency cell measurement, a low priority inter-frequency cell measurement and/or a middle priority inter-frequency cell measurement. The method includes block 101.

At block 101, the first relaxation mode in the candidate relaxation modes is switched to the second relaxation mode in the candidate relaxation modes to perform the relaxed measurement in response to a measurement relaxation criterion of low mobility and a measurement relaxation criterion of not located at a cell edge configured by a network being satisfied and a determination result indicating that the terminal is in a stationary state. Looseness of the relaxed measurement performed based on the second relaxation mode is greater than that of the relaxed measurement performed based on the first relaxation mode.

In an embodiment, performing the relaxed measurement based on the second relaxation mode is relaxed to performing the relaxed measurement based on the fourth relaxation mode or the sixth relaxation mode in response to the measurement relaxation criterion of the low mobility and the measurement relaxation criterion of not located at a cell edge configured by the network being satisfied and the determination result indicating that the terminal is in the predetermined state.

Here, the looseness of the relaxed measurement performed based on the second relaxation mode is less than that of the relaxed measurement performed based on the fourth relaxation mode. The looseness of the relaxed measurement performed based on the second relaxation mode is less than that of the relaxed measurement performed based on the sixth relaxation mode.

It should be noted that, those skilled in the art may understand that the methods provided in the embodiments of the present disclosure may be executed separately, or may also be executed together with some methods in the embodiments of the present disclosure or some methods in the related art.

As shown in FIG 11, a method for measurement relaxation is provided in the embodiments of the present disclosure. The method is executed by a terminal. The terminal is a non-cell-center terminal performing an intra-frequency cell measurement, a low priority inter-frequency cell measurement and/or a middle priority inter-frequency cell measurement. The method includes block 111.

At block 111, the first relaxation mode in the candidate relaxation modes is switched to the second relaxation mode in the candidate relaxation modes to perform the relaxed measurement in response to one of a measurement relaxation criterion of low mobility or a measurement relaxation criterion of not located at a cell edge configured by a network being satisfied and a determination result indicating that the terminal is in a stationary state. Looseness of the relaxed measurement performed based on the second relaxation mode is greater than that of the relaxed measurement performed based on the first relaxation mode.

In an embodiment, in response to one of the measurement relaxation criterion of the low mobility or the measurement relaxation criterion of not located at a cell edge configured by the network being satisfied and the determination result indicating that the terminal is in the stationary state, performing the relaxed measurement based on a third relaxation mode is relaxed to performing the relaxed measurement based on the second relaxation mode or a fourth relaxation mode, or performing the relaxed measurement based on the first relaxation mode is relaxed to performing the relaxed measurement based on a sixth relaxation mode,.

Here, the looseness of the relaxed measurement performed based on the third relaxation mode is less than that of the relaxed measurement performed based on the second relaxation mode. The looseness of the relaxed measurement performed based on the third relaxation mode is less than that of the relaxed measurement performed based on the fourth relaxation mode. The looseness of the relaxed measurement performed based on the first relaxation mode is less than that of the relaxed measurement performed based on the sixth relaxation mode.

It should be noted that, those skilled in the art may understand that the methods provided in the embodiments of the present disclosure may be executed separately, or may also be executed together with some methods in the embodiments of the present disclosure or some methods in the related art.

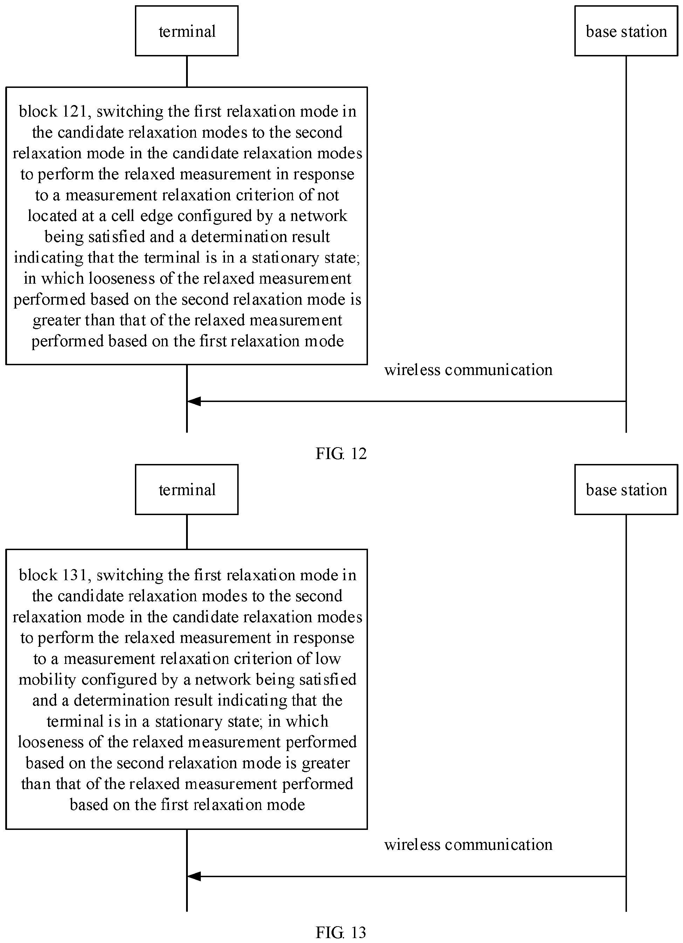

As shown in FIG 12, a method for measurement relaxation is provided in the embodiments of the present disclosure. The method is executed by a terminal. The terminal is a non-cell-center terminal performing an intra-frequency cell measurement, a low priority inter-frequency cell measurement and/or a middle priority inter-frequency cell measurement. The method includes block 121.

At block 121, the first relaxation mode in the candidate relaxation modes is switched to the second relaxation mode in the candidate relaxation modes to perform the relaxed measurement in response to a measurement relaxation criterion of not located at a cell edge configured by a network being satisfied and a determination result indicating that the terminal is in a stationary state. Looseness of the relaxed measurement performed based on the second relaxation mode is greater than that of the relaxed measurement performed based on the first relaxation mode.

In an embodiment, in response to the measurement relaxation criterion of not located at a cell edge configured by the network being satisfied and the determination result indicating that the terminal is in the stationary state, performing the relaxed measurement based on a third relaxation mode is relaxed to performing the relaxed measurement based on the second relaxation mode or a fourth relaxation mode, or performing the relaxed measurement based on the first relaxation mode is relaxed to performing the relaxed measurement based on a sixth relaxation mode.

Here, the looseness of the relaxed measurement performed based on the third relaxation mode is less than that of the relaxed measurement performed based on the second relaxation mode. The looseness of the relaxed measurement performed based on the third relaxation mode is less than that of the relaxed measurement performed based on the fourth relaxation mode. The looseness of the relaxed measurement performed based on the first relaxation mode is less than that of the relaxed measurement performed based on the sixth relaxation mode.

It should be noted that, those skilled in the art may understand that the methods provided in the embodiments of the present disclosure may be executed separately, or may also be executed together with some methods in the embodiments of the present disclosure or some methods in the related art.

As shown in FIG 13, a method for measurement relaxation is provided in the embodiments of the present disclosure. The method is executed by a terminal. The terminal is a non-cell-center terminal performing an intra-frequency cell measurement, a low priority inter-frequency cell measurement and/or a middle priority inter-frequency cell measurement. The method includes block 131.

At block 131, the first relaxation mode in the candidate relaxation modes is switched to the second relaxation mode in the candidate relaxation modes to perform the relaxed measurement in response to a measurement relaxation criterion of low mobility configured by a network being satisfied and a determination result indicating that the terminal is in a stationary state. Looseness of the relaxed measurement performed based on the second relaxation mode is greater than that of the relaxed measurement performed based on the first relaxation mode.

In an embodiment, in response to the measurement relaxation criterion of the low mobility configured by the network being satisfied and the determination result indicating that the terminal is in the stationary state, performing the relaxed measurement based on a third relaxation mode is relaxed to performing the relaxed measurement based on the second relaxation mode or a fourth relaxation mode, or performing the relaxed measurement based on the first relaxation mode is relaxed to performing the relaxed measurement based on a sixth relaxation mode,.

Here, the looseness of the relaxed measurement performed based on the third relaxation mode is less than that of the relaxed measurement performed based on the fourth relaxation mode. The looseness of the relaxed measurement performed based on the third relaxation mode is less than that of the relaxed measurement performed based on the second relaxation mode. The looseness of the relaxed measurement performed based on the first relaxation mode is less than that of the relaxed measurement performed based on the sixth relaxation mode.

It should be noted that, those skilled in the art may understand that the methods provided in the embodiments of the present disclosure may be executed separately, or may also be executed together with some methods in the embodiments of the present disclosure or some methods in the related art.

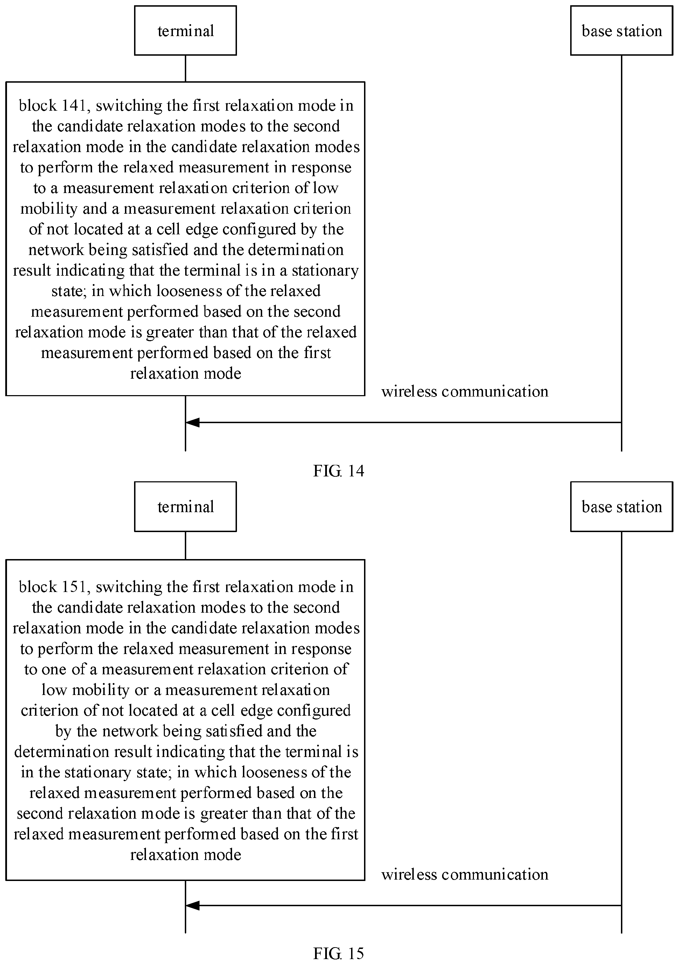

As shown in FIG 14, a method for measurement relaxation is provided in the embodiments of the present disclosure. The method is executed by a terminal. The terminal is a non-cell-center terminal performing a high priority inter-frequency cell measurement. The method includes block 141.

At block 141, the first relaxation mode in the candidate relaxation modes is switched to the second relaxation mode in the candidate relaxation modes to perform the relaxed measurement in response to a measurement relaxation criterion of low mobility and a measurement relaxation criterion of not located at a cell edge configured by the network being satisfied and the determination result indicating that the terminal is in a stationary state. Looseness of the relaxed measurement performed based on the second relaxation mode is greater than that of the relaxed measurement performed based on the first relaxation mode.

In an embodiment, performing the relaxed measurement based on the second relaxation mode is relaxed to performing the relaxed measurement based on a fourth relaxation mode or a sixth relaxation mode in response to the measurement relaxation criterion of the low mobility and the measurement relaxation criterion of not located at a cell edge configured by the network being satisfied and the determination result indicating that the terminal is in the stationary state.

Here, the looseness of the relaxed measurement performed based on the second relaxation mode is less than that of the relaxed measurement performed based on the sixth relaxation mode. The looseness of the relaxed measurement performed based on the second relaxation mode is less than that of the relaxed measurement performed based on the fourth relaxation mode.

It should be noted that, those skilled in the art may understand that the methods provided in the embodiments of the present disclosure may be executed separately, or may also be executed together with some methods in the embodiments of the present disclosure or some methods in the related art.

As shown in FIG 15, a method for measurement relaxation is provided in the embodiments of the present disclosure. The method is executed by a terminal. The terminal is a non-cell-center terminal performing a high priority inter-frequency cell measurement. The method includes block 151.

At block 151, the first relaxation mode in the candidate relaxation modes is switched to the second relaxation mode in the candidate relaxation modes to perform the relaxed measurement in response to one of the measurement relaxation criterion of low mobility or the measurement relaxation criterion of not located at a cell edge configured by the network being satisfied and the determination result indicating that the terminal is in the stationary state. Looseness of the relaxed measurement performed based on the second relaxation mode is greater than that of the relaxed measurement performed based on the first relaxation mode.

In an embodiment, in response to one of the measurement relaxation criterion of the low mobility or the measurement relaxation criterion of not located at a cell edge configured by the network being satisfied and the determination result indicating that the terminal is in the stationary state, performing the relaxed measurement based on a third relaxation mode is relaxed to performing the relaxed measurement based on the second relaxation mode or a fourth relaxation mode, or performing the relaxed measurement based on the first relaxation mode is relaxed to performing the relaxed measurement based on a sixth relaxation mode.

Here, the looseness of the relaxed measurement performed based on the third relaxation mode is less than that of the relaxed measurement performed based on the fourth relaxation mode. The looseness of the relaxed measurement performed based on the third relaxation mode is less than that of the relaxed measurement performed based on the second relaxation mode. The looseness of the relaxed measurement performed based on the first relaxation mode is less than that of the relaxed measurement performed based on the sixth relaxation mode.

It should be noted that, those skilled in the art may understand that the methods provided in the embodiments of the present disclosure may be executed separately, or may also be executed together with some methods in the embodiments of the present disclosure or some methods in the related art.

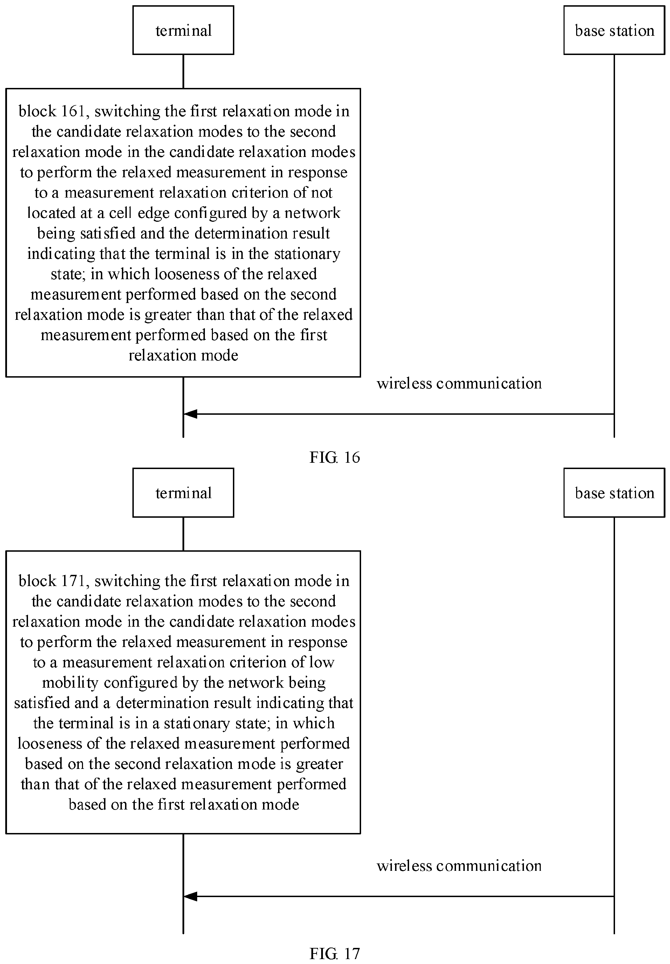

As shown in FIG 16, a method for measurement relaxation is provided in the embodiments of the present disclosure. The method is executed by a terminal. The terminal is a non-cell-center terminal performing a high priority inter-frequency cell measurement. The method includes block 161.

At block 161, the first relaxation mode in the candidate relaxation modes is switched to the second relaxation mode in the candidate relaxation modes to perform the relaxed measurement in response to a measurement relaxation criterion of not located at a cell edge configured by a network being satisfied and the determination result indicating that the terminal is in the stationary state. Looseness of the relaxed measurement performed based on the second relaxation mode is greater than that of the relaxed measurement performed based on the first relaxation mode.

In an embodiment, in response to the measurement relaxation criterion of not located at a cell edge configured by the network being satisfied and the determination result indicating that the terminal is in the stationary state, performing the relaxed measurement based on a third relaxation mode is relaxed to performing the relaxed measurement based on the second relaxation mode or a fourth relaxation mode, or performing the relaxed measurement based on the first relaxation mode is relaxed to performing the relaxed measurement based on the sixth relaxation mode.

Here, the looseness of the relaxed measurement performed based on the third relaxation mode is less than that of the relaxed measurement performed based on the second relaxation mode. The looseness of the relaxed measurement performed based on the third relaxation mode is less than that of the relaxed measurement performed based on the fourth relaxation mode. The looseness of the relaxed measurement performed based on the first relaxation mode is less than that of the relaxed measurement performed based on the sixth relaxation mode.

It should be noted that, those skilled in the art may understand that the methods provided in the embodiments of the present disclosure may be executed separately, or may also be executed together with some methods in the embodiments of the present disclosure or some methods in the related art.

As shown in FIG 17, a method for measurement relaxation is provided in the embodiments of the present disclosure. The method is executed by a terminal. The terminal is a non-cell-center terminal performing a high priority inter-frequency cell measurement. The method includes block 171.

At block 171, the first relaxation mode in the candidate relaxation modes is switched to the second relaxation mode in the candidate relaxation modes to perform the relaxed measurement in response to a measurement relaxation criterion of low mobility configured by the network being satisfied and a determination result indicating that the terminal is in a stationary state. Looseness of the relaxed measurement performed based on the second relaxation mode is greater than that of the relaxed measurement performed based on the first relaxation mode.

In an embodiment, in response to the measurement relaxation criterion of the low mobility configured by the network being satisfied and the determination result indicating that the terminal is in the stationary state, performing the relaxed measurement based on the first relaxation mode is relaxed to performing the relaxed measurement based on the second relaxation mode or a fourth performed mode, or performing the relaxed measurement based on the first relaxation mode is relaxed to performing the relaxed measurement based on the sixth relaxation mode.

Here, the looseness of the relaxed measurement performed based on the first relaxation mode is less than that of the relaxed measurement performed based on the fourth relaxation mode. The looseness of the relaxed measurement performed based on the first relaxation mode is less than that of the relaxed measurement performed based on the second relaxation mode. The looseness of the relaxed measurement performed based on the first relaxation mode is less than that of the relaxed measurement performed based on the sixth relaxation mode.

It should be noted that, those skilled in the art may understand that the methods provided in the embodiments of the present disclosure may be executed separately, or may also be executed together with some methods in the embodiments of the present disclosure or some methods in the related art.

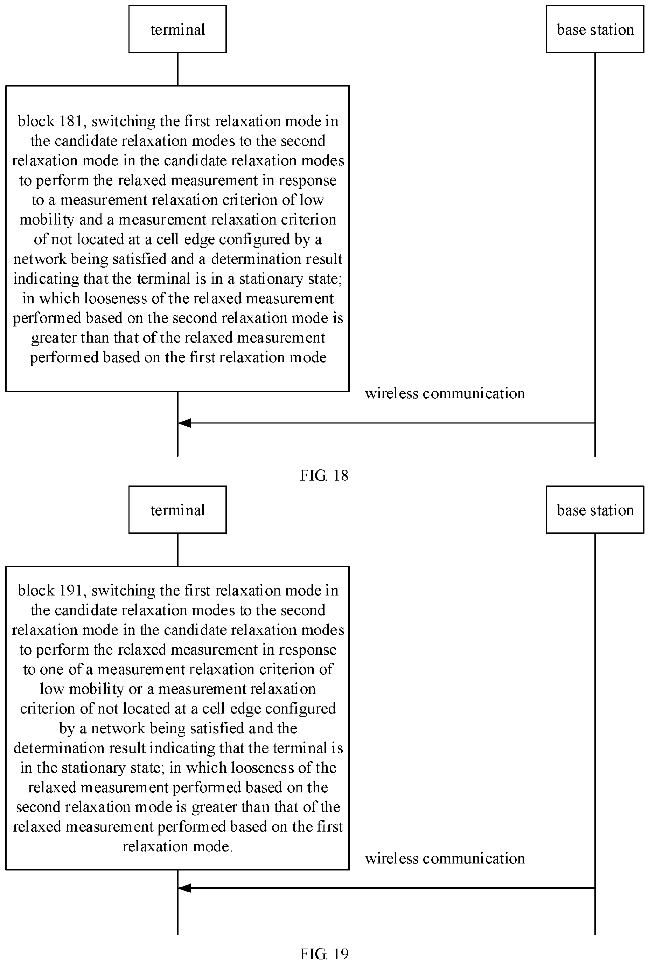

As shown in FIG 18, a method for measurement relaxation is provided in the embodiments of the present disclosure. The method is executed by a terminal. The terminal is a cell-center terminal performing a high priority interfrequency cell measurement. The method includes block 181.

At block 181, the first relaxation mode in the candidate relaxation modes is switched to the second relaxation mode in the candidate relaxation modes to perform the relaxed measurement in response to a measurement relaxation criterion of low mobility and a measurement relaxation criterion of not located at a cell edge configured by a network being satisfied and a determination result indicating that the terminal is in a stationary state. Looseness of the relaxed measurement performed based on the second relaxation mode is greater than that of the relaxed measurement performed based on the first relaxation mode.

In an embodiment, performing the relaxed measurement based on the second relaxation mode is relaxed to performing the relaxed measurement performed on a fourth relaxation mode or a sixth relaxation mode in response to the measurement relaxation criterion of the low mobility and the measurement relaxation criterion of not located at a cell edge configured by the network being satisfied and the determination result indicating that the terminal is in the stationary state.

Here, the looseness of the relaxed measurement performed based on the second relaxation mode is less than that of the relaxed measurement performed based on the fourth relaxation mode. The looseness of the relaxed measurement performed based on the second relaxation mode is less than that of the relaxed measurement performed based on the sixth relaxation mode.

It should be noted that, those skilled in the art may understand that the methods provided in the embodiments of the present disclosure may be executed separately, or may also be executed together with some methods in the embodiments of the present disclosure or some methods in the related art.

As shown in FIG 19, a method for measurement relaxation is provided in the embodiments of the present disclosure. The method is executed by a terminal. The terminal is a cell-center terminal performing a high priority interfrequency cell measurement. The method includes block 191.

At block 191, the first relaxation mode in the candidate relaxation modes is switched to the second relaxation mode in the candidate relaxation modes to perform the relaxed measurement in response to one of a measurement relaxation criterion of low mobility or a measurement relaxation criterion of not located at a cell edge configured by a network being satisfied and the determination result indicating that the terminal is in a stationary state. Looseness of the relaxed measurement performed based on the second relaxation mode is greater than that of the relaxed measurement performed based on the first relaxation mode.

In an embodiment, in response to one of the measurement relaxation criterion of the low mobility or the measurement relaxation criterion of not located at a cell edge configured by the network being satisfied and the determination result indicating that the terminal is in the stationary state, performing the relaxed measurement based on the first relaxation mode is relaxed to performing the relaxed measurement based on the fourth relaxation mode or the sixth relaxation mode, or performing the relaxed measurement based on the second relaxation mode is relaxed to performing the relaxed measurement based on the fourth relaxation mode or the sixth relaxation mode.

Here, the looseness of the relaxed measurement performed based on the first relaxation mode is less than that of the relaxed measurement performed based on the fourth relaxation mode. The looseness of the relaxed measurement performed based on the first relaxation mode is less than that of the relaxed measurement performed based on the sixth relaxation mode. The looseness of the relaxed measurement performed based on the second relaxation mode is less than that of the relaxed measurement performed based on the fourth relaxation mode. The looseness of the relaxed measurement performed based on the second relaxation mode is less than that of the relaxed measurement performed based on the sixth relaxation mode.

It should be noted that, those skilled in the art may understand that the methods provided in the embodiments of the present disclosure may be executed separately, or may also be executed together with some methods in the embodiments of the present disclosure or some methods in the related art.

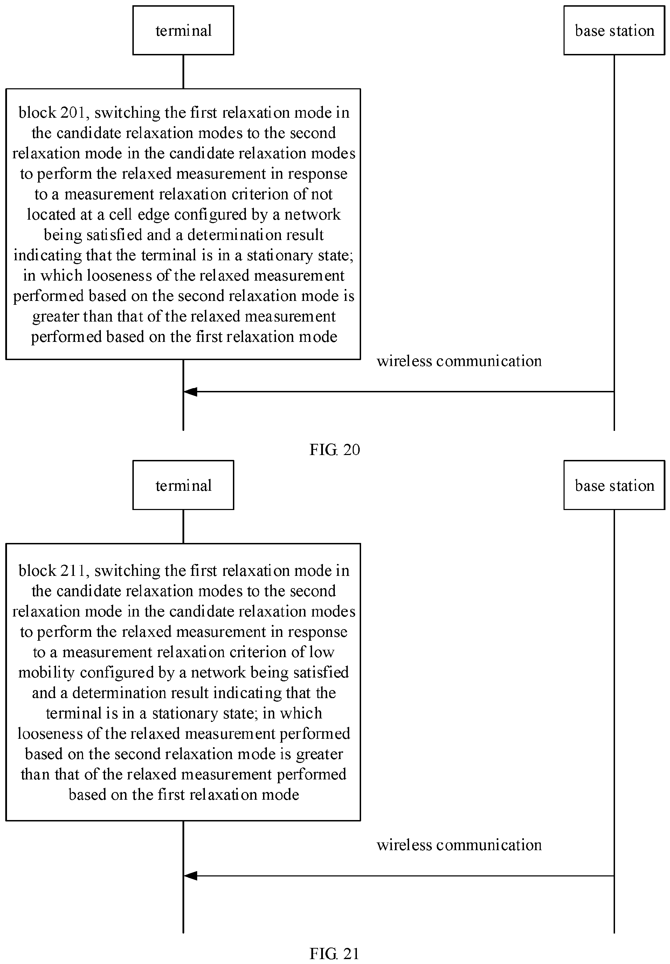

As shown in FIG 20, a method for measurement relaxation is provided in the embodiments of the present disclosure. The method is executed by a terminal. The terminal is a cell-center terminal performing a high priority inter-frequency cell measurement. The method includes block 201.

At block 201, the first relaxation mode in the candidate relaxation modes is switched to the second relaxation mode in the candidate relaxation modes to perform the relaxed measurement in response to a measurement relaxation criterion of not located at a cell edge configured by a network being satisfied and a determination result indicating that the terminal is in a stationary state. Looseness of the relaxed measurement performed based on the second relaxation mode is greater than that of the relaxed measurement performed based on the first relaxation mode.

In an embodiment, in response to the measurement relaxation criterion of not located at a cell edge configured by the network being satisfied and the determination result indicating that the terminal is in the stationary state, performing the relaxed measurement based on a third relaxation mode is relaxed to performing the relaxed measurement based on the second relaxation mode or a fourth relaxation mode, or performing the relaxed measurement based on the first relaxation mode is relaxed to performing the relaxed measurement based on a sixth relaxation mode.

Here, the looseness of the relaxed measurement performed based on the third relaxation mode is less than that of the relaxed measurement performed based on the second relaxation mode. The looseness of the relaxed measurement performed based on the third relaxation mode is less than that of the relaxed measurement performed based on the fourth relaxation mode. The looseness of the relaxed measurement performed based on the first relaxation mode is less than that of the relaxed measurement performed based on the sixth relaxation mode.

It should be noted that, those skilled in the art may understand that the methods provided in the embodiments of the present disclosure may be executed separately, or may also be executed together with some methods in the embodiments of the present disclosure or some methods in the related art.

As shown in FIG 21, a method for measurement relaxation is provided in the embodiments of the present disclosure. The method is executed by a terminal. The terminal is a cell-center terminal performing a high priority inter-frequency cell measurement. The method includes block 211.

At block 211, the first relaxation mode in the candidate relaxation modes is switched to the second relaxation mode in the candidate relaxation modes to perform the relaxed measurement in response to a measurement relaxation criterion of low mobility configured by a network being satisfied and a determination result indicating that the terminal is in a stationary state. Looseness of the relaxed measurement performed based on the second relaxation mode is greater than that of the relaxed measurement performed based on the first relaxation mode.

In an embodiment, in response to the measurement relaxation criterion of the low mobility configured by the network being satisfied and the determination result indicating that the terminal is in the stationary state, performing the relaxed measurement based on the second relaxation mode is relaxed to performing the relaxed measurement based on a fourth relaxation mode or a sixth relaxation mode, or performing the relaxed measurement based on a third relaxation mode is relaxed to performing the relaxed measurement based on the fourth relaxation mode or the sixth relaxation mode.

Here, the looseness of the relaxed measurement performed based on the second relaxation mode is less than that of the relaxed measurement performed based on the fourth relaxation mode. The looseness of the relaxed measurement performed based on the second relaxation mode is less than that of the relaxed measurement performed based on the sixth relaxation mode. The looseness of the relaxed measurement performed based on the third relaxation mode is less than that of the relaxed measurement performed based on the fourth relaxation mode. The looseness of the relaxed measurement performed based on the third relaxation mode is less than that of the relaxed measurement based on the sixth relaxation mode.

It should be noted that, those skilled in the art may understand that the methods provided in the embodiments of the present disclosure may be executed separately, or may also be executed together with some methods in the embodiments of the present disclosure or some methods in the related art.

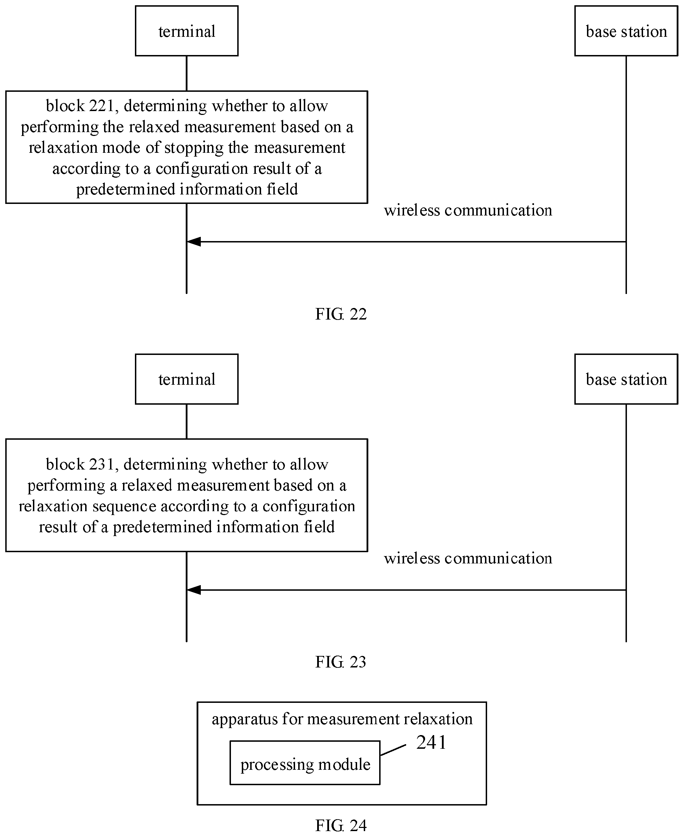

As shown in FIG 22, a method for measurement relaxation is provided in the embodiment of the present disclosure. The method is executed by a terminal, and the method includes block 221.

At block 221, whether to allow performing the relaxed measurement based on a relaxation mode of stopping the measurement is determined according to a configuration result of a predetermined information field.

In an embodiment, the predetermined information field includes one or more of a first predetermined information field, a second predetermined information field and a third predetermined information field.

The first predetermined information field is configured to indicate whether a non-cell-center terminal performing an intra-frequency measurement, a low priority inter-frequency cell measurement and/or a middle priority inter-frequency measurement is allowed to use a relaxation mode of stopping the measurement to perform the relaxed measurement.

The second predetermined information field is configured to indicate whether the non-cell-center terminal performing the high priority inter-frequency cell measurement is allowed to use the relaxation mode of stopping the measurement to perform the relaxed measurement.

The third predetermined information field is configured to indicate whether a cell-center terminal performing the high priority inter-frequency cell measurement is allowed to use the relaxation mode of stopping the measurement to perform the relaxed measurement.

In an embodiment, the predetermined information field is the first predetermined information field. The first predetermined information field is configured to indicate whether the non-cell-center terminal performing the intra-frequency measurement, the middle priority inter-frequency measurement and/or the low priority inter-frequency measurement is allowed to relax to stopping the measurement. For example, the non-cell-center terminal performing the inter-frequency measurement, the middle priority intra-frequency measurement and/or the low priority inter-frequency measurement is not allowed to relax to stopping the measurement in response to the first predetermined information field indicating a first value. The non-cell-center terminal performing the intra-frequency measurement, the middle priority inter-frequency measurement and/or the low priority inter-frequency measurement is allowed to relax to stopping the measurement in response to the first predetermined information field indicating a second value.

In an embodiment, the terminal is the non-cell-center terminal performing the intra-frequency measurement, the middle priority inter-frequency measurement, and/or the low priority inter-frequency measurement. The terminal relaxes the relaxed measurement performed based on the original relaxation mode to stopping the measurement in response to the terminal needing to perform the relaxed measurement, the determination result indicating that the terminal is in the stationary state, and the terminal being allowed to relax to stopping the measurement.

In an embodiment, the predetermined information field is the second predetermined information field. The second predetermined information field is configured to indicate whether the non-cell-center terminal performing the high priority inter-frequency measurement is allowed to relax to stopping the measurement. For example, the non-cell-center terminal performing the high priority inter-frequency measurement is not allowed to relax to stopping the measurement in response to the second predetermined information field indicating the first value. The non-cell-center terminal performing the high priority inter-frequency measurement is allowed to relax to stopping the measurement in response to the second predetermined information field indicating the second value.

In an embodiment, the terminal is the non-cell-center terminal performing the high priority inter-frequency measurement. The terminal relaxes the relaxed measurement performed based on the original relaxation mode to stopping the measurement in response to the terminal needing to perform the relaxed measurement, the determination result indicating that the terminal is in the stationary state, and the terminal being allowed to relax to stopping the measurement.

In an embodiment, the predetermined information field is the third information domain. The third predetermined information field is configured to indicate whether the cell-center terminal performing the high priority inter-frequency measurement is allowed to relax to stopping the measurement. For example, the cell-center terminal performing the high priority inter-frequency measurement is not allowed to relax to stopping the measurement in response to the third predetermined information field indicating a third value. The cell-center terminal performing the high priority inter-frequency measurement is allowed to relax to stopping the measurement in response to the third predetermined information field indicating the second value.

In an embodiment, the terminal is the cell-center terminal performing the high priority inter-frequency measurement. The terminal relaxes the relaxed measurement performed based on the original relaxation mode to stopping the measurement in response to the terminal needing to perform the relaxed measurement, the determination result indicating that the terminal is in the stationary state, and the terminal being allowed to relax to stopping the measurement.

In an embodiment, it is determined that the terminal is allowed to relax to stopping the measurement in response to the predetermined information field being configured. It is determined that the terminal is not allowed to relax to stopping the measurement in response to the predetermined information field not being configured.

In an embodiment, the second predetermined information field and the third predetermined information field may correspond to the same predetermined information field. That is, the predetermined information field is configured to be commonly used by the cell-center terminal and the non-cell-center terminal performing the high priority inter-frequency measurements. For example, the predetermined information field is configured as the first value, both the cell-center terminal and the non-cell-center terminal are not allowed to relax to stopping the measurement.

In an embodiment, the first predetermined information field, the second predetermined information field, and the third predetermined information field may correspond to the same predetermined information field. That is, the predetermined information field is configured to be commonly used by the terminals of all measurement types. For example, the predetermined information field is configured as the first value, both the cell-center terminal and the non-cell-center terminal performing all the measurement types are not allowed to relax to stopping the measurement.

It should be noted that, those skilled in the art may understand that the methods provided in the embodiments of the present disclosure may be executed separately, or may also be executed together with some methods in the embodiments of the present disclosure or some methods in the related art.

In an embodiment, the predetermined information field includes one or more of a fourth predetermined information field, a fifth predetermined information field, a sixth predetermined information field, and a seventh predetermined information field.

The fourth predetermined information field is configured to indicate whether the terminal is allowed to perform the relaxed measurement based on the relaxation sequence in response to the network configuring a measurement relaxation criterion of not located at a cell edge and a non-cell-edge terminal which performs the intra-frequency cell measurement and/or the low priority inter-frequency cell measurement being in the predetermined state.

The fifth predetermined information field is configured to indicate whether the terminal is allowed to perform the relaxed measurement based on the relaxation sequence in response to the network configuring a measurement relaxation criterion of low mobility and the cell-center terminal which performs the high priority inter-frequency cell measurement satisfying the low mobility.

The sixth predetermined information field is configured to indicate whether the terminal is allowed to perform the relaxed measurement based on the relaxation sequence in response to the network configuring the measurement relaxation criterion of not located at a cell edge and the cell-center terminal which performs the high priority inter-frequency cell measurement being in the predetermined state.

The seventh predetermined information field is configured to indicate whether the terminal is allowed to perform the relaxed measurement based on the relaxation sequence in response to the network configuring the measurement relaxation criterion of not located at a cell edge and the non-cell-edge terminal which performs the high priority inter-frequency cell measurement being in the predetermined state.

The predetermined state includes the stationary state or a moving state with a moving speed less than a speed threshold.

As shown in FIG 23, a method for measurement relaxation is provided in the embodiment of the present disclosure. The method is executed by a terminal, and the method includes block 231.

At block 231, whether to allow performing a relaxed measurement based on a relaxation sequence is determined according to a configuration result of a predetermined information field.

In an embodiment, the predetermined information field includes one or more of a fourth predetermined information field, a fifth predetermined information field, a sixth predetermined information field, and a seventh predetermined information field.

The fourth predetermined information field is configured to indicate whether the terminal is allowed to perform the relaxed measurement based on the relaxation sequence in response to a network configuring a e measurement relaxation criterion of not located at a cell edge and a non-cell-edge terminal which performs an intra-frequency measurement and/or a low priority inter-frequency cell measurement being in a stationary state.

The fifth predetermined information field is configured to indicate whether the terminal is allowed to perform the relaxed measurement based on the relaxation sequence in response to the network configuring a measurement relaxation criterion of low mobility and a cell-center terminal which performs a high priority inter-frequency cell measurement satisfying the low mobility.

The sixth predetermined information field is configured to indicate whether the terminal is allowed to perform the relaxed measurement based on the relaxation sequence in response to the network configuring the measurement relaxation criterion of not located at a cell edge and the cell-center terminal which performs the high priority inter-frequency cell measurement being in the stationary state.

The seventh predetermined information field is configured to indicate whether the terminal is allowed to perform the relaxed measurement based on the relaxation sequence in response to the network configuring the measurement relaxation criterion of not located at a cell edge and a non-cell-edge terminal which performs the high priority inter-frequency cell measurement being in the stationary state.

In an embodiment, the predetermined information field is the fourth predetermined information field. The fourth predetermined information field is configured to indicate whether the terminal is allowed to perform the relaxed measurement based on the relaxation sequence in response to the network configuring the measurement relaxation criterion of not located at a cell edge and the non-cell-edge terminal which performs the intra-frequency cell measurement and/or the low priority inter-frequency cell measurement being in the stationary state. For example, the non-cell-edge terminal performing the intra-frequency cell measurement and/or the low priority inter-frequency measurement is not allowed to perform the relaxed measurement based on the relaxation sequence in response to the fourth predetermined information field indicating a first value. The non-cell-edge terminal performing the intra-frequency cell measurement and/or the low priority inter-frequency measurement is allowed to perform the relaxed measurement based on the relaxation sequence in response to the fourth predetermined information field indicating a second value.

In an embodiment, the terminal is the non-cell edge terminal performing the intra-frequency measurement and/or the low priority inter-frequency measurement. It is determined that a relaxed-measurement operation is performed based on the relaxation sequence in response to the terminal needing to perform the relaxed measurement, a determination result indicating that the terminal is in the stationary state, and the terminal being allowed to perform the relaxed measurement based on the relaxation sequence.

In an embodiment, the predetermined information field is the fifth predetermined information field. The fifth predetermined information field is configured to indicate whether the terminal is allowed to perform the relaxed measurement based on the relaxation sequence in response to the network configuring the measurement relaxation criterion of the low mobility and the cell-center terminal performing the high priority inter-frequency cell measurement satisfying the low mobility. For example, the terminal performing the high priority inter-frequency cell measurement is not allowed to perform the relaxed measurement based on the relaxation sequence in response to the fifth predetermined information field indicating the first value. The terminal performing the high priority inter-frequency cell measurement is allowed to perform the relaxed measurement based on the relaxation sequence in response to the fifth predetermined information field indicating the second value.

In an embodiment, the terminal is the terminal performing the high priority inter-frequency cell measurement. It is determined that the relaxed-measurement operation is performed based on the relaxation sequence in response to the terminal needing to perform the relaxed measurement, the determination result indicating that the terminal is in the stationary state, and the terminal being allowed to perform the relaxed measurement based on the relaxation sequence.

In an embodiment, the predetermined information field is the sixth predetermined information field. The sixth predetermined information field is configured to indicate whether the terminal is allowed to perform the relaxed measurement based on the relaxation sequence in response to the network configuring the measurement relaxation criterion of not located at a cell edge and the cell-center terminal which performs the high priority inter-frequency cell measurement being in the stationary state. For example, the cell-center terminal performing the high priority inter-frequency cell measurement is not allowed to perform the relaxed measurement based on the relaxation sequence in response to the sixth predetermined information field indicating the first value. The cell-center terminal performing the high priority inter-frequency cell measurement is allowed to perform the relaxed measurement based on the relaxation sequence in response to the sixth predetermined information field indicating the second value.

In an embodiment, the terminal is the cell-center terminal performing the high priority inter-frequency cell measurement. It is determined that the relaxed-measurement operation is performed based on the relaxation sequence in response to the terminal needing to perform the relaxed measurement, the determination result indicating that the terminal is in the stationary state, and the terminal being allowed to perform the relaxed measurement based on the relaxation sequence.

In an embodiment, the predetermined information field is the seventh predetermined information field. The seventh predetermined information field is configured to indicate whether the terminal is allowed to perform the relaxed measurement based on the relaxation sequence in response to the network configuring the measurement relaxation criterion of not located at a cell edge and the non-cell-edge terminal which performs the high priority inter-frequency cell measurement being in the stationary state. For example, the non-cell-edge terminal performing the high priority inter-frequency cell measurement is not allowed to perform the relaxed measurement based on the relaxation sequence in response to the seventh predetermined information field indicating the first value. The non-cell-edge terminal performing the high priority inter-frequency cell measurement is allowed to perform the relaxed measurement based on the relaxation sequence in response to the seventh predetermined information field indicating the second value.

In an embodiment, the terminal is the non-cell-edge terminal performing the high priority inter-frequency cell measurement. It is determined that the relaxed-measurement operation is performed based on the relaxation sequence in response to the terminal needing to perform the relaxed measurement, the determination result indicating that the terminal is in the stationary state, and the terminal being allowed to perform the relaxed measurement based on the relaxation sequence.

In an embodiment, it is determined that the terminal is allowed to relax to stopping the measurement in response to the predetermined information field being configured. It is determined that the terminal is not allowed to perform the relaxed measurement based on the relaxation sequence in response to the predetermined information field not being configured.

In an embodiment, the fifth predetermined information field, the sixth predetermined information field, and the seventh predetermined information field may correspond to the same predetermined information field. That is, the predetermined information field is configured to be commonly used by the terminals performing the high priority inter-frequency measurement. For example, the predetermined information field is configured as the first value, the terminals performing the high priority inter-frequency measurement are not allowed to perform the relaxed measurement based on relaxation sequence.

In an embodiment, the fourth predetermined information field, the fifth predetermined information field, the sixth predetermined information field, and the seventh predetermined information field may correspond to the same predetermined information field. That is, the predetermined information field is configured to be commonly used by the terminals of all the measurement types. For example, the predetermined information field is configured as the first value, the terminals of all the measurement types are not allowed to perform the relaxed measurement based on the relaxation sequence.

It should be noted that, those skilled in the art may understand that the methods provided in the embodiments of the present disclosure may be executed separately, or may also be executed together with some methods in the embodiments of the present disclosure or some methods in the related art.

As shown in FIG 24, an apparatus for measurement relaxation is provided in the embodiments of the present disclosure. The apparatus is applied to a terminal, and the apparatus includes a processing module 241.

The processing module 241 is configured to:

perform a relaxed-measurement operation based on a relaxation sequence in response to the terminal in a predetermined state performing a relaxed measurement.

The relaxation sequence indicates at least two candidate relaxation modes, and the candidate relaxation modes correspond to different relaxed-measurement parameters.

It should be noted that, those skilled in the art may understand that the methods provided in the embodiments of the present disclosure may be executed separately, or may also be executed together with some methods in the embodiments of the present disclosure or some methods in the related art.

A communication device is provided in the embodiments of the present disclosure. The communication device includes:

a processor;
a memory configured to store instructions executable by the processor.

The processor is configured to implement the method in any of the embodiments in the present disclosure when executing the instructions.

The processor may include various types of storage medium, and the storage medium is a non-transitory computer storage medium, and may continue to memorize the information stored thereon after the communication device is powered down.

The processor may be connected to the memory via a bus or the like, and is configured to read executable programs stored on the memory.

According to the embodiments of the present disclosure, a computer storage medium with a computer executable program stored thereon is further provided. The method of any embodiment of the present disclosure is implemented when the executable program is executed by the processor.

With regard to the apparatus in the above embodiments, the specific way in which each module performs the operation has been described in detail in the embodiments of the method and will not be elaborated here.

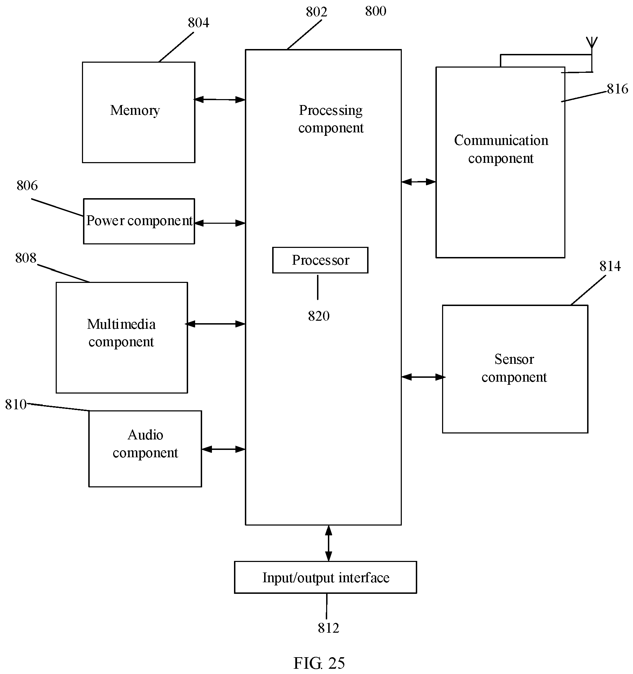

As shown in FIG 25, a structure of a terminal is illustrated in an embodiment of the present disclosure.

Referring to the terminal 800 shown in FIG 25, the terminal 800 is provided in the embodiment. For example, the terminal may specifically be a mobile phone, a computer, a digital broadcasting terminal, a messaging device, a game console, a tablet device, a medical device, a fitness equipment, a personal digital assistant, etc.

As illustrated in FIG 25, the terminal 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the whole operation of the terminal 800, such as the operations related to display, phone call, data communication, camera operations and recording operations. The processing component 802 may include one or more processors 820 to perform instructions, to complete all or part of steps of the above method. In addition, the processing component 802 may include one or more modules for the convenience of interaction between the processing component 802 and other components. For example, the processing component 802 may include a multimedia module for the convenience of interaction between the multimedia component 808 and the processing component 802.

The memory 804 is configured to store various types of data to support the operation of the device 800. Examples of the data include the instructions of any applications or methods operated on the terminal 800, contact data, phone book data, messages, pictures, videos, etc. The memory 804 may be implemented by any type of volatile or non-volatile storage devices or their combination, such as a stationary random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 806 may provide power supply for various components of the terminal 800. The power supply component 806 may include a power supply management system, one or more power supplies, and other components related to generating, managing and distributing power for the terminal 800.

The multimedia component 808 includes a screen for providing an output interface between the terminal 800 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touching, sliding and gestures on the touch panel. The touch sensor may not only sense the boundary of the touching or sliding action, but also detect the duration and pressure related to the touching or sliding operation. In some embodiments, the multimedia component 808 includes a front camera and/or a rear camera. When the terminal 800 is in an operation mode, such as a shooting mode or a video mode, the front camera or the rear camera may receive the external multimedia data. Each front camera and rear camera may be a fixed optical lens system or an optical lens system with focal length and optical zoom capacity.

The audio component 810 is configured to output and/or input signals. For example, the audio component 810 includes a microphone (MIC). When the terminal 800 is in the operation mode, such as a call mode, a recording mode, and a speech recognition mode, the microphone is configured to receive the external audio signals. The audio signals received may be further stored in the memory 804 or sent via the communication component 816. In some embodiments, the audio component 810 further includes a speaker configured to output an audio signal.

The I/O interface 812 provides an interface between the processing component 802 and a peripheral interface module, and the peripheral interface module may be a keyboard, a click wheel, a button, etc. The button may include but not limited to a home button, a volume button, a start button and a lock button.

The sensor component 814 includes one or more sensors, configured to provide various aspects of status assessment for the terminal 800. For example, the sensor component 814 may detect the on/off state of the device 800 and the relative positioning of the components. For example, the components are the display and the keypad of the terminal 800. The sensor component 814 may also detect the location change of the terminal 800 or a component of the terminal 800, the presence or absence of contact between the user and the terminal 800, the orientation or acceleration/deceleration of the terminal 800, and the temperature change of the terminal 800. The sensor component 814 may include a proximity sensor, which is configured to detect the existence of the objects nearby without any physical contact. The sensor component 814 may further include a light sensor such as CMOS or CCD image sensor, which is configured to use in imaging applications. In some embodiments, the sensor component 814 may further include an acceleration transducer, a gyroscope sensor, a magnetic sensor, a pressure sensor or a temperature sensor.

The communication component 816 may be configured for the convince of wired or wireless communication between the terminal 800 and other devices. The terminal 800 may access wireless networks based on communication standard, such as WiFi, 2G or 3G, or their combination. In an exemplary embodiment, the communication component 816 receives broadcast signals or broadcast-related information from an external broadcast management system via a broadcast channel. In an exemplary embodiment, the communication component 816 further includes a near field communication (NFC) module to facilitate short-range communication. For example, an NFC module may be implemented based on radio frequency identification (RFID) technology, infrared data association (IRDA) technology, ultra-wideband (UWB) technology, bluetooth (BT) technology and other technologies.

In an exemplary embodiment, the terminal 800 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an exemplary embodiment, a non- transitory computer readable storage medium is further provided which includes instructions, such as the memory 804 including instructions, in which the instructions may be executed by the processor 820 of the terminal 800 to complete the above methods. For example, the non-transitory computer readable storage medium may be a ROM, a random access memory (RAM), a CD-ROM, a magnetic tape, a floppy disk, an optical data storage device, etc.

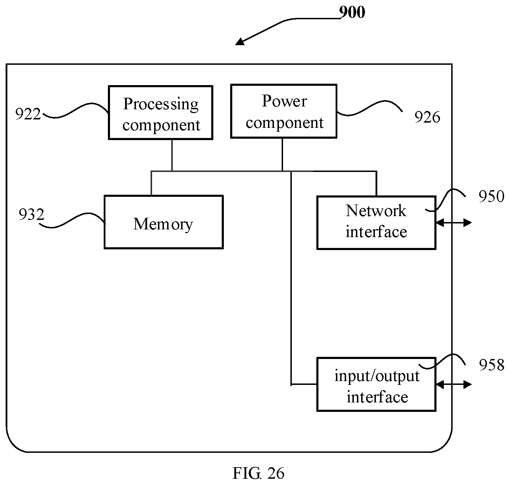

As shown in FIG 26, a structure of a base station is illustrated in an embodiment of the present disclosure. For example, the base station 900 may be provided as a network side device. Referring to FIG 26, the base station 900 includes a processing component 922, which further include one or more processors, and memory resources represented by the memory 932, which are configured to store instructions, such as an application, executed by the processing component 922. The application stored in the memory 932 may include one or more modules each of which corresponds to a set of instructions. In addition, the processing component 922 is configured to execute instructions, to execute any of the methods described above performed by the base station.

The base station 900 may further include a power supply component 926 configured to execute power management of the base station 900, a wired or wireless network interface 950 configured to connect the base station 900 to a network, and an input/output (I/O) interface 958. The base station 900 may operate an operating system stored in the memory 932, for example, Windows Server TM, Mac OS XTM, UnixTM, LinuxTM, FreeBSDTM or the like.

After considering the specification and practicing the disclosure herein, those skilled in the art will easily think of other implementations. The present disclosure is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are defined by the appended claims.

It should be understood that the present disclosure is not limited to the precise structure described above and shown in the drawings, and various modifications and changes may be made without departing from its scope. The scope of the present disclosure is limited by the appended claims.

**Claims**

1. A method for measurement relaxation, performed by a terminal, comprising:

   performing a relaxed-measurement operation based on a relaxation sequence in response to the terminal in a predetermined state performing a relaxed measurement;
   wherein the relaxation sequence indicates at least two candidate relaxation modes, and the candidate relaxation modes correspond to different relaxed-measurement parameters.

2. The method of claim 1, wherein performing the relaxed-measurement operation based on the relaxation sequence in response to the terminal in the predetermined state performing the relaxed measurement comprises:

   performing the relaxed-measurement operation based on the relaxation sequence in response to the terminal with a moving speed less than a speed threshold performing the relaxed measurement;
   or,
   performing the relaxed-measurement operation based on the relaxation sequence in response to the terminal in a stationary state performing the relaxed measurement.

3. The method of claim 2, wherein the relaxation sequence indicates at least N candidate relaxation modes, $N \geq 2$, and looseness of relaxed measurements performed based on the N candidate relaxation modes are different.

4. The method of any one of claims 1 to 3, wherein the relaxation sequence is determined based on a measurement type of a cell measurement.

5. The method of claim 4, wherein the measurement type comprises one or more of:
   an intra-frequency cell measurement, a low priority inter-frequency cell measurement, a middle priority inter-frequency cell measurement, and a high priority inter-frequency cell measurement.

6. The method of any one of claims 1 to 5, wherein, in response to the measurement type being the intra-frequency cell measurement, the low priority inter-frequency cell measurement and/or the middle priority inter-frequency cell measurement, the candidate relaxation modes comprise one or more of:

   a first relaxation mode, configured to indicate relaxing a measurement period to N1 times of a time measurement interval, where N1 is a positive number greater than 1;
   a second relaxation mode, configured to indicate stopping the measurement for N2 hours, where N2 is a positive number;
   a fourth relaxation mode, configured to indicate stopping the measurement for N3 hours, where N3 is a positive number greater than N2;
   a fifth relaxation mode, configured to indicate relaxing the measurement period to N4 times of the time measurement interval, where N4 is a positive number greater than N1; and
   a sixth relaxation mode, configured to indicate stopping the measurement.

7. The method of any one of claims 1 to 5, wherein, in response to the measurement type being a high priority inter-frequency cell measurement, the candidate relaxation modes comprise one or more of:

   a first relaxation mode, configured to indicate relaxing a measurement period to N1 times of a time measurement interval, where N1 is a positive number greater than 1;
   a second relaxation mode, configured to indicate stopping a measurement for N2 hours, where N2 is a positive number;
   a third relaxation mode, configured to indicate relaxing the measurement period to a measurement interval of a1 seconds, where a1 is a positive number;
   a fourth relaxation mode, configured to indicate stopping the measurement for N3 hours, where N3 is a positive number greater than N2;
   a fifth relaxation mode, configured to indicate relaxing the measurement period to N4 times of the time measurement interval, where N4 is a positive number greater than N1;
   a sixth relaxation mode, configured to indicate stopping the measurement; and
   a seventh relaxation mode, configured to indicate relaxing the measurement period to a measurement interval of a2 seconds, where a2 is greater than a1.

**8.** The method of claim 6 or 7, wherein the terminal is a non-cell-center terminal, and performing the relaxed-measurement operation based on the relaxation sequence in response to the terminal in the predetermined state performing the relaxed measurement comprises:

in response to a measurement relaxation criterion of low mobility and a measurement relaxation criterion of not located at a cell edge configured by a network being satisfied and the terminal being in the predetermined state, switching from the first relaxation mode in the candidate relaxation modes to the second relaxation mode in the candidate relaxation modes to perform the relaxed measurement;
or,
in response to one of the measurement relaxation criterion of low mobility or the measurement relaxation criterion of not located at a cell edge configured by the network being satisfied and the terminal being in the predetermined state, switching from the first relaxation mode in the candidate relaxation modes to the second relaxation mode in the candidate relaxation modes to perform the relaxed measurement;
or,
in response to the measurement relaxation criterion of not located at a cell edge configured by the network being satisfied and the terminal being in the predetermined state, switching from the first relaxation mode in the candidate relaxation modes to the second relaxation mode in the candidate relaxation modes to perform the relaxed measurement;
or,
in response to the measurement relaxation criterion of low mobility configured by the network being satisfied and the terminal being in the predetermined state, switching from the first relaxation mode in the candidate relaxation modes to the second relaxation mode in the candidate relaxation modes to perform the relaxed measurement;
wherein the predetermined state comprises a stationary state or a moving state with a moving speed less than a speed threshold; looseness of the relaxed measurement performed based on the second relaxation mode is greater than looseness of the relaxed measurement performed based on the first relaxation mode.

**9.** The method of claim 7, wherein the terminal is a cell-center terminal, and performing the relaxed-measurement operation based on the relaxation sequence in response to the terminal in the predetermined state performing the relaxed measurement comprises:

in response to a measurement relaxation criterion of low mobility and a measurement relaxation criterion of not located at a cell edge configured by a network being satisfied and the terminal being in the predetermined state, switching from the first relaxation mode in the candidate relaxation modes to the second relaxation mode in the candidate relaxation modes to perform the relaxed measurement;
or,
in response to one of the measurement relaxation criterion of low mobility or the measurement relaxation criterion of not located at a cell edge configured by the network being satisfied and the terminal being in the predetermined state, switching from the first relaxation mode in the candidate relaxation modes to the second relaxation mode in the candidate relaxation modes to perform the relaxed measurement;
or,
in response to the measurement relaxation criterion of not located at a cell edge configured by the network being satisfied and a determination result indicating that the terminal is in the predetermined state, switching from the first relaxation mode in the candidate relaxation modes to the second relaxation mode in the candidate relaxation modes to perform the relaxed measurement;
or,
in response to the measurement relaxation criterion of low mobility configured by the network being satisfied and the determination result indicating that the terminal is in the predetermined state, switching from the first relaxation mode in the candidate relaxation modes to the second relaxation mode in the candidate relaxation modes to perform the relaxed measurement;
wherein the predetermined state comprises a stationary state or a moving state with a moving speed less than a speed threshold; looseness of the relaxed measurement performed based on the second relaxation mode is greater than looseness of the relaxed measurement performed based on the first relaxation mode.

**10.** The method of claim 1, further comprising:
determining, according to a configuration result of a predetermined information field, whether to allow performing the relaxed measurement based on a relaxation mode of stopping the measurement.

11. The method of claim 10, wherein the predetermined information field comprises one or more of:

a first predetermined information field, configured to indicate whether a non-cell-center terminal performing an intra-frequency measurement, a low priority inter-frequency cell measurement and/or a middle priority inter-frequency measurement is allowed to use a relaxation mode of stopping the measurement to perform the relaxed measurement;

a second predetermined information field, configured to indicate whether a non-cell-center terminal performing a high priority inter-frequency cell measurement is allowed to use the relaxation mode of stopping the measurement to perform the relaxed measurement; and

a third predetermined information field, configured to indicate whether a cell-center terminal performing a high priority inter-frequency cell measurement is allowed to use the relaxation mode of stopping the measurement to perform the relaxed measurement.

12. The method of claim 1, further comprising:
determining, according to a configuration result of a predetermined information field, whether to allow performing the relaxed measurement based on the relaxation sequence.

13. The method of claim 12, wherein the predetermined information field comprises one or more of:

a fourth predetermined information field, configured to indicate whether the terminal is allowed to perform the relaxed measurement based on the relaxation sequence in response to a network configuring a measurement relaxation criterion of not located at a cell edge and a non-cell-edge terminal performing an intra-frequency cell measurement and/or a low priority inter-frequency cell measurement being in the predetermined state;

a fifth predetermined information field, configured to indicate whether the terminal is allowed to perform the relaxed measurement based on the relaxation sequence in response to the network configuring a measurement relaxation criterion of low mobility and a cell-center terminal performing a high priority inter-frequency cell measurement satisfying the low mobility;

a sixth predetermined information field, configured to indicate whether the terminal is allowed to perform the relaxed measurement based on the relaxation sequence in response to the network configuring the measurement relaxation criterion of not located at a cell edge and the cell-center terminal performing the high priority inter-frequency cell measurement being in the predetermined state; and

a seventh predetermined information field, configured to indicate whether the terminal is allowed to perform the relaxed measurement based on the relaxation sequence in response to the network configuring a measurement relaxation criterion of not located at a cell edge and a non-cell-edge terminal performing a high priority inter-frequency cell measurement being in the predetermined state;

wherein the predetermined state comprises a stationary state or a moving state with a moving speed less than a speed threshold.

14. An apparatus for measurement relaxation, performed by a terminal, s comprising a processing module, wherein the processing module is configured to:

perform a relaxed-measurement operation based on a relaxation sequence in response to the terminal in a predetermined state performing a relaxed measurement;

wherein the relaxation sequence indicates at least two candidate relaxation modes, and the candidate relaxation modes correspond to different relaxed-measurement parameters.

15. A communication device, comprising:

an antenna;

a memory;

a processor, connected to the antenna and the memory respectively, configured to control transmission and reception of the antenna by executing a computer-executable instruction stored on the memory, and implements the method of any one of claims 1 to 13.

16. A computer readable storage medium having computer-executable instructions stored thereon that, when the computer-executable instructions are executed by a processor, the method of any one of claims 1 to 13 is implemented.

FIG. 1

cell-edge region

non-cell-edge region

cell-center region

FIG. 2

EP 4 319 243 A1

FIG. 3

FIG. 4

terminal

base station

block 51, performing a relaxed-measurement operation based on a relaxation sequence in response to the terminal in a stationary state performing the relaxed measurement

wireless communication

FIG. 5

terminal

base station

block 61, in response to the terminal needing to perform the relaxed measurement, based on a determination result of whether the terminal is in a stationary state, determining to perform a relaxed-measurement operation based on a relaxation sequence; in which the relaxation sequence at least indicates that performing the relaxed measurement based on an original relaxation mode is relaxed to performing the relaxed measurement based on a candidate relaxation mode according to an order of relaxation modes

wireless communication

FIG. 6

```
        ┌─────────────┐                          ┌──────────────┐
        │  terminal   │                          │ base station │
        └──────┬──────┘                          └──────┬───────┘
               │                                        │
 ┌─────────────┴─────────────────────────────┐         │
 │ block 71, determining that a relaxed       │         │
 │ measurement is performed based on a        │         │
 │ relaxation sequence in response to a       │         │
 │ determination result indicating that       │         │
 │ the terminal is in a stationary state      │         │
 └─────────────┬─────────────────────────────┘         │
               │         wireless communication         │
               │◄───────────────────────────────────────│
               │                                        │
```

FIG. 7

```
        ┌─────────────┐                          ┌──────────────┐
        │  terminal   │                          │ base station │
        └──────┬──────┘                          └──────┬───────┘
               │                                        │
 ┌─────────────┴─────────────────────────────┐         │
 │ block 81, determining to perform a relaxed │         │
 │ measurement based on an original relaxation│         │
 │ mode in response to a determination result │         │
 │ indicating that the terminal exits a       │         │
 │ predetermined state                        │         │
 └─────────────┬─────────────────────────────┘         │
               │         wireless communication         │
               │◄───────────────────────────────────────│
               │                                        │
```

FIG. 8

```
        ┌─────────────┐                          ┌──────────────┐
        │  terminal   │                          │ base station │
        └──────┬──────┘                          └──────┬───────┘
               │                                        │
 ┌─────────────┴─────────────────────────────┐         │
 │ block 91, a relaxation sequence is         │         │
 │ determined based on a measurement type     │         │
 │ of a cell measurement; in which the        │         │
 │ measurement type includes one or more of:  │         │
 │ an intra-frequency cell measurement, a low │         │
 │ priority inter-frequency cell measurement, │         │
 │ a middle priority inter-frequency cell     │         │
 │ measurement, and a high priority inter-    │         │
 │ frequency cell measurement                 │         │
 └─────────────┬─────────────────────────────┘         │
               │         wireless communication         │
               │◄───────────────────────────────────────│
               │                                        │
```

FIG. 9

terminal

base station

block 101, switching the first relaxation mode in the candidate relaxation modes to the second relaxation mode in the candidate relaxation modes to perform the relaxed measurement in response to a measurement relaxation criterion of low mobility and a measurement relaxation criterion of not located at a cell edge configured by a network being satisfied and a determination result indicating that the terminal is in a stationary state; in which looseness of the relaxed measurement performed based on the second relaxation mode is greater than that of the relaxed measurement performed based on the first relaxation mode

wireless communication

FIG. 10

terminal

base station

block 111, switching the first relaxation mode in the candidate relaxation modes to the second relaxation mode in the candidate relaxation modes to perform the relaxed measurement in response to one of a measurement relaxation criterion of low mobility or a measurement relaxation criterion of not located at a cell edge configured by a network being satisfied and a determination result indicating that the terminal is in a stationary state; in which looseness of the relaxed measurement performed based on the second relaxation mode is greater than that of the relaxed measurement performed based on the first relaxation mode

wireless communication

FIG. 11

```
        ┌──────────────┐                              ┌──────────────┐
        │   terminal   │                              │ base station │
        └──────┬───────┘                              └──────┬───────┘
               │                                             │
┌──────────────┴────────────────────────────────┐           │
│ block 121, switching the first relaxation mode │           │
│  in the candidate relaxation modes to the      │           │
│  second relaxation mode in the candidate       │           │
│  relaxation modes to perform the relaxed       │           │
│  measurement in response to a measurement      │           │
│  relaxation criterion of not located at a cell │           │
│  edge configured by a network being satisfied  │           │
│  and a determination result indicating that    │           │
│  the terminal is in a stationary state;        │           │
│  in which looseness of the relaxed measurement │           │
│  performed based on the second relaxation mode │           │
│  is greater than that of the relaxed           │           │
│  measurement performed based on the first      │           │
│  relaxation mode                               │           │
└──────────────┬─────────────────────────────────┘          │
               │              wireless communication         │
               │◄────────────────────────────────────────────│
               │                                             │
```

FIG. 12

```
        ┌──────────────┐                              ┌──────────────┐
        │   terminal   │                              │ base station │
        └──────┬───────┘                              └──────┬───────┘
               │                                             │
┌──────────────┴────────────────────────────────┐           │
│ block 131, switching the first relaxation mode │           │
│  in the candidate relaxation modes to the      │           │
│  second relaxation mode in the candidate       │           │
│  relaxation modes to perform the relaxed       │           │
│  measurement in response to a measurement      │           │
│  relaxation criterion of low mobility          │           │
│  configured by a network being satisfied       │           │
│  and a determination result indicating that    │           │
│  the terminal is in a stationary state; in     │           │
│  which looseness of the relaxed measurement    │           │
│  performed based on the second relaxation mode │           │
│  is greater than that of the relaxed           │           │
│  measurement performed based on the first      │           │
│  relaxation mode                               │           │
└──────────────┬─────────────────────────────────┘          │
               │              wireless communication         │
               │◄────────────────────────────────────────────│
               │                                             │
```

FIG. 13

terminal

base station

block 141, switching the first relaxation mode in the candidate relaxation modes to the second relaxation mode in the candidate relaxation modes to perform the relaxed measurement in response to a measurement relaxation criterion of low mobility and a measurement relaxation criterion of not located at a cell edge configured by the network being satisfied and the determination result indicating that the terminal is in a stationary state; in which looseness of the relaxed measurement performed based on the second relaxation mode is greater than that of the relaxed measurement performed based on the first relaxation mode

wireless communication

FIG. 14

terminal

base station

block 151, switching the first relaxation mode in the candidate relaxation modes to the second relaxation mode in the candidate relaxation modes to perform the relaxed measurement in response to one of a measurement relaxation criterion of low mobility or a measurement relaxation criterion of not located at a cell edge configured by the network being satisfied and the determination result indicating that the terminal is in the stationary state; in which looseness of the relaxed measurement performed based on the second relaxation mode is greater than that of the relaxed measurement performed based on the first relaxation mode

wireless communication

FIG. 15

| terminal | | base station |

block 161, switching the first relaxation mode in the candidate relaxation modes to the second relaxation mode in the candidate relaxation modes to perform the relaxed measurement in response to a measurement relaxation criterion of not located at a cell edge configured by a network being satisfied and the determination result indicating that the terminal is in the stationary state; in which looseness of the relaxed measurement performed based on the second relaxation mode is greater than that of the relaxed measurement performed based on the first relaxation mode

wireless communication

FIG. 16

| terminal | | base station |

block 171, switching the first relaxation mode in the candidate relaxation modes to the second relaxation mode in the candidate relaxation modes to perform the relaxed measurement in response to a measurement relaxation criterion of low mobility configured by the network being satisfied and a determination result indicating that the terminal is in a stationary state; in which looseness of the relaxed measurement performed based on the second relaxation mode is greater than that of the relaxed measurement performed based on the first relaxation mode

wireless communication

FIG. 17

| terminal | | base station |
|---|---|---|

block 181, switching the first relaxation mode in the candidate relaxation modes to the second relaxation mode in the candidate relaxation modes to perform the relaxed measurement in response to a measurement relaxation criterion of low mobility and a measurement relaxation criterion of not located at a cell edge configured by a network being satisfied and a determination result indicating that the terminal is in a stationary state; in which looseness of the relaxed measurement performed based on the second relaxation mode is greater than that of the relaxed measurement performed based on the first relaxation mode

wireless communication

FIG. 18

| terminal | | base station |
|---|---|---|

block 191, switching the first relaxation mode in the candidate relaxation modes to the second relaxation mode in the candidate relaxation modes to perform the relaxed measurement in response to one of a measurement relaxation criterion of low mobility or a measurement relaxation criterion of not located at a cell edge configured by a network being satisfied and the determination result indicating that the terminal is in the stationary state; in which looseness of the relaxed measurement performed based on the second relaxation mode is greater than that of the relaxed measurement performed based on the first relaxation mode.

wireless communication

FIG. 19

```
┌──────────┐                                    ┌──────────────┐
│ terminal │                                    │ base station │
└──────────┘                                    └──────────────┘
```

block 201, switching the first relaxation mode in the candidate relaxation modes to the second relaxation mode in the candidate relaxation modes to perform the relaxed measurement in response to a measurement relaxation criterion of not located at a cell edge configured by a network being satisfied and a determination result indicating that the terminal is in a stationary state; in which looseness of the relaxed measurement performed based on the second relaxation mode is greater than that of the relaxed measurement performed based on the first relaxation mode

wireless communication

FIG. 20

```
┌──────────┐                                    ┌──────────────┐
│ terminal │                                    │ base station │
└──────────┘                                    └──────────────┘
```

block 211, switching the first relaxation mode in the candidate relaxation modes to the second relaxation mode in the candidate relaxation modes to perform the relaxed measurement in response to a measurement relaxation criterion of low mobility configured by a network being satisfied and a determination result indicating that the terminal is in a stationary state; in which looseness of the relaxed measurement performed based on the second relaxation mode is greater than that of the relaxed measurement performed based on the first relaxation mode

wireless communication

FIG. 21

```
┌──────────┐                                    ┌──────────────┐
│ terminal │                                    │ base station │
└────┬─────┘                                    └──────┬───────┘
     │                                                 │
┌────┴──────────────────────────────────┐             │
│ block 221, determining whether to allow│             │
│ performing the relaxed measurement      │             │
│ based on a relaxation mode of stopping  │             │
│ the measurement according to a          │             │
│ configuration result of a predetermined │             │
│ information field                       │             │
└────┬──────────────────────────────────┘             │
     │         wireless communication                  │
     │◄────────────────────────────────────────────────│
     │                                                 │
```

FIG. 22

```
┌──────────┐                                    ┌──────────────┐
│ terminal │                                    │ base station │
└────┬─────┘                                    └──────┬───────┘
     │                                                 │
┌────┴──────────────────────────────────┐             │
│ block 231, determining whether to allow│             │
│ performing a relaxed measurement based  │             │
│ on a relaxation sequence according to a │             │
│ configuration result of a predetermined │             │
│ information field                       │             │
└────┬──────────────────────────────────┘             │
     │         wireless communication                  │
     │◄────────────────────────────────────────────────│
     │                                                 │
```

FIG. 23

```
┌──────────────────────────────────────────┐
│ apparatus for measurement relaxation       │
│   ┌────────────────────┐   ╱ 241           │
│   │ processing module  │                    │
│   └────────────────────┘                    │
└──────────────────────────────────────────┘
```

FIG. 24

804

802          800

Memory

Processing
component

Communication
component

816

806

Power component

808

Multimedia
component

Processor

820

Sensor
component

814

810

Audio
component

Input/output interface

812

FIG. 25

**900**

FIG. 26

## INTERNATIONAL SEARCH REPORT

International application No.

**PCT/CN2021/083694**

### A. CLASSIFICATION OF SUBJECT MATTER

H04W 24/00(2009.01)i

According to International Patent Classification (IPC) or to both national classification and IPC

### B. FIELDS SEARCHED

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNKI, CNPAT, WPI, EPODOC, 3GPP: 放松, 测量, 方式, 放松序列, 移动速度, 阈值, 静止, 小区, 同频, 异频, 测量周期, 测量间隔, 边缘, relax, measur+, mode, relaxing sequence, moving speed, threshold, stationary, cell, intra-frequency, inter-frequency, measurement period, measurement interval, edge.

### C. DOCUMENTS CONSIDERED TO BE RELEVANT

| Category* | Citation of document, with indication, where appropriate, of the relevant passages | Relevant to claim No. |
|---|---|---|
| X | CN 111294853 A (ZHANXUN SEMICONDUCTOR (NANJING) CO., LTD.) 16 June 2020 (2020-06-16)<br>      claims 1-24 | 1-16 |
| X | US 2021076275 A1 (YIU, C. et al.) 11 March 2021 (2021-03-11)<br>      claims 1-25 | 1-16 |
| X | WO 2021029686 A1 (SAMSUNG ELECTRONICS CO., LTD.) 18 February 2021 (2021-02-18)<br>      claims 1-15 | 1-16 |
| A | CN 111278028 A (ZHANXUN SEMICONDUCTOR (NANJING) CO., LTD.) 12 June 2020 (2020-06-12)<br>      entire document | 1-16 |
| A | CN 111770529 A (GUANGDONG XIAOTIANCAI TECHNOLOGY CO., LTD.) 13 October 2020 (2020-10-13)<br>      entire document | 1-16 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 December 2021** | **30 December 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/083694**

| Patent document cited in search report | | | Publication date (day/month/year) | Patent family member(s) | | | Publication date (day/month/year) |
|---|---|---|---|---|---|---|---|
| CN | 111294853 | A | 16 June 2020 | None | | | |
| US | 2021076275 | A1 | 11 March 2021 | None | | | |
| WO | 2021029686 | A1 | 18 February 2021 | KR | 20210055578 | A | 17 May 2021 |
| CN | 111278028 | A | 12 June 2020 | None | | | |
| CN | 111770529 | A | 13 October 2020 | None | | | |

Form PCT/ISA/210 (patent family annex) (January 2015)